(19)

**Europäisches Patentamt**
**European Patent Office**
**Office européen des brevets**

(11)  **EP 4 693 188 A1**

(12)  **EUROPEAN PATENT APPLICATION**

(43) Date of publication:
**11.02.2026  Bulletin 2026/07**

(21) Application number: **25192658.0**

(22) Date of filing: **29.07.2025**

(51) International Patent Classification (IPC):
*G06T 7/55* $^{(2017.01)}$

(52) Cooperative Patent Classification (CPC):
**G06T 7/55;** G06T 2207/10016; G06T 2207/10032;
G06T 2207/30181

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  **07.08.2024  JP 2024130765**

(71) Applicant: **Nec Aerospace Systems, Ltd.**
**Tokyo 183-8502 (JP)**

(72) Inventors:
• **SAKAUE, Takahito**
**Tokyo, 183-8502 (JP)**

• **NUREKI, Yu**
**Tokyo, 183-8502 (JP)**
• **MATSUKI, Tomohiro**
**Tokyo, 183-8502 (JP)**
• **SATO, Hiroki**
**Tokyo, 183-8502 (JP)**
• **MASUDA, Yousuke**
**Tokyo, 183-8502 (JP)**

(74) Representative: **Vossius & Partner**
**Patentanwälte Rechtsanwälte mbB**
**Siebertstraße 3**
**81675 München (DE)**

(54)  **IMAGE PROCESSING DEVICE, IMAGE PROCESSING METHOD, AND PROGRAM**

(57)  Provided is a method of acquiring image data generated by imaging by the imaging means arranged to have different line-of-sight directions, superimposing the image data while performing alignment in such a way as to eliminate absolute positional shift caused by the different line-of-sight directions in each piece of image data, selecting a transverse line that transverses an overlapping portion of the superimposed image data according to a direction in which ranges of each piece of image data in a superimposed state are shifted, generating epipolar plane image data by arranging each piece of image data of a portion where the selected transverse line and the overlapping portion overlap in an order determined by magnitudes of inclinations of the line-of-sight directions corresponding to each, and detecting a depth of a subject appearing in the image data from a streak pattern appearing in the generated epipolar plane image data.

Fig.1

EP 4 693 188 A1

## Description

This application is based upon and claims the benefit of priority from Japanese Patent Application No. 2024-130765, filed on August 7, 2024, the disclosure of which is incorporated herein in its entirety by reference.

## TECHNICAL FIELD

The present disclosure relates to an image processing device, an image processing system, an image processing method, and a program.

## BACKGROUND ART

As disclosed in JP 2023-086449 A, distinguishing of cloud in a satellite image is performed using, for example, reflection intensity that is a pixel value of a pixel of a visible image, a brightness temperature that is a pixel value of a pixel of an infrared image, and the like.

## SUMMARY

However, in the wavelength band of visible light, both ice and snow and clouds have a high reflectance of sunlight and are similar to each other, and thus, reflection intensities are similar to each other, and it is difficult to distinguish by the method disclosed in JP 2023-086449 A.

On the other hand, in the wavelength band of infrared light, since there is a difference in reflectance between ice and snow and clouds, there is also a difference in brightness temperature, and thus ice and snow and clouds can be distinguished by the method disclosed in JP 2023-086449 A. In addition, if an active sensor such as light detection and ranging (LiDAR) is used, the position of the object in the depth direction can be detected by irradiating a target with a signal and measuring the distance, so that it is possible to distinguish between ice and snow existing on the ground and a cloud floating in the air.

However, in order to use a device such as an infrared sensor or LiDAR capable of receiving a wavelength band of infrared light, it is necessary to add these devices to an artificial satellite together with an existing imaging device for imaging and generating a satellite image. However, this addition involves an increase in cost due to an increase in the number of devices, and an increase in cost for launching an artificial satellite due to an increase in the weight of the artificial satellite. Therefore, in a case where it is desired to suppress an increase in cost, there arises a problem of distinguishing a position in the depth direction of a subject appearing in image data imaged and generated by an existing imaging device without adding a device for imaging.

One of an object of the present disclosure is to provide an image processing Device, an image processing system, an image processing method, and a program for solving the problem described above.

An image processing device according to one aspect of the present disclosure includes an image acquisition means for acquiring image data generated by imaging by an imaging means arranged to have different line-of-sight directions, an image superimposition means for superimposing the image data while performing alignment in such a way as to eliminate absolute positional shift caused by the different line-of-sight directions in each piece of image data, an epipolar plane image generation means for selecting a transverse line that transverses an overlapping portion of the superimposed image data according to a direction in which ranges of each piece of image data in a superimposed state are shifted, and generating epipolar plane image data by arranging each piece of image data of a portion where the selected transverse line and the overlapping portion overlap in an order determined by magnitudes of inclinations of the line-of-sight directions corresponding to each, and a depth detection means for detecting a depth of a subject appearing in the image data from a streak pattern appearing in the epipolar plane image data.

An image processing system according to one aspect of the present disclosure includes an imaging means, and an image processing device, in which the image processing device includes, an image acquisition means for acquiring image data generated by imaging by an imaging means arranged to have different line-of-sight directions, an image superimposition means for superimposing the image data while performing alignment in such a way as to eliminate absolute positional shift caused by the different line-of-sight directions in each piece of image data, an epipolar plane image generation means for selecting a transverse line that transverses an overlapping portion of the superimposed image data according to a direction in which ranges of each piece of image data in a superimposed state are shifted, and generating epipolar plane image data by arranging each piece of image data of a portion where the selected transverse line and the overlapping portion overlap in an order determined by magnitudes of inclinations of the line-of-sight directions corresponding to each, and a depth detection means for detecting a depth of a subject appearing in the image data from a streak pattern appearing in the epipolar plane image data.

An image processing method according to one aspect of the present disclosure includes acquiring image data generated by imaging by the imaging means arranged to have different line-of-sight directions, superimposing the image data while performing alignment in such a way as to eliminate absolute positional shift caused by the different line-of-sight directions in each piece of acquired image data, selecting a transverse line that transverses an overlapping portion of the superimposed image data according to a direction in which ranges of each piece of image data in a superimposed state are shifted, generating epipolar plane image data by arranging each piece of image data of a portion where the selected transverse line and the overlapping portion overlap in an order determined by magnitudes of inclinations of the line-of-sight directions corresponding to each, and detecting a depth of a subject appearing in the image data from a streak pattern appearing in the generated epipolar plane image data.

A program according to one aspect of the present disclosure for causing a computer to execute a process: acquiring image data generated by imaging by the imaging means arranged to have different line-of-sight directions, superimposing the image data while performing alignment in such a way as to eliminate absolute positional shift caused by the different line-of-sight directions in each piece of image data, selecting a transverse line that transverses an overlapping portion of the superimposed image data according to a direction in which ranges of each piece of image data in a superimposed state are shifted, generating epipolar plane image data by arranging each piece of image data of a portion where the selected transverse line and the overlapping portion overlap in an order determined by magnitudes of inclinations of the line-of-sight directions corresponding to each, and detecting a depth of a subject appearing in the image data from a streak pattern appearing in the epipolar plane image data.

According to the above one aspect, a position in a depth direction of a subject appearing in the image data imaged and generated by an existing imaging device can be distinguished without adding a device for imaging.

**BRIEF DESCRIPTION OF THE DRAWINGS**

Fig. 1 is a block diagram illustrating an example of a configuration of an image processing system according to the present disclosure;
Fig. 2 is a block diagram illustrating an example of a configuration of an imaging device according to the present disclosure;
Fig. 3 is a diagram illustrating a difference in imaging points due to a difference in a line-of-sight direction of the line sensor according to the present disclosure;
Fig. 4 is a diagram illustrating a positional relationship among a plurality of pieces of image data generated by imaging of each of a plurality of line sensors according to the present disclosure;
Fig. 5 is a diagram illustrating a difference in timing of imaging at the same point by the line sensors according to the present disclosure;
Fig. 6 is a diagram (part 1) illustrating a time series change in an imaging target of the line sensor according to the present disclosure;
Fig. 7 is a diagram (part 2) illustrating a time series change in an imaging target of the line sensor according to the present disclosure;
Fig. 8 is a diagram (part 3) illustrating a time series change in an imaging target of the line sensor according to the present disclosure;

Figs. 9Ais a first diagram for explaining a position shift occurring in a subject appearing in a plurality of pieces of image data generated by imaging of each of a plurality of line sensors according to the present disclosure;
Figs. 9B is a second diagram for explaining a position shift occurring in a subject appearing in a plurality of pieces of image data generated by imaging of each of a plurality of line sensors according to the present disclosure;
Figs. 9C is a third diagram for explaining a position shift occurring in a subject appearing in a plurality of pieces of image data generated by imaging of each of a plurality of line sensors according to the present disclosure;
Fig. 10 is a block diagram illustrating an example of an internal configuration of an image processing device according to the present disclosure and a connection relationship among the image processing device, a ground station device, and a control device;
Fig. 11 is a flowchart illustrating an example of a flow of processing by the image processing device according to the present disclosure;
Fig. 12 is a diagram illustrating an example of processing by an epipolar plane image generation unit according to the present disclosure;
Fig. 13 is a diagram illustrating an example of epipolar plane image data generated by the epipolar plane image generation unit according to the present disclosure;
Fig. 14 is a diagram illustrating an example of a method for quantifying a streak pattern appearing in the epipolar plane image data according to the present disclosure;
Fig. 15 is a block diagram illustrating an example of an internal configuration of an image processing device according to the present disclosure and a connection relationship among the image processing device, a ground station device, and a control device;
Fig. 16 is a block diagram illustrating an example of a hardware configuration of the image processing device according to the present disclosure;
Fig. 17 is a block diagram illustrating an example of a configuration of the image processing device according to the present disclosure; and
Fig. 18 is a flowchart illustrating an example of a flow of processing by the image processing device according to the present disclosure.

**EXAMPLE EMBODIMENT**

Hereinafter, each example embodiment will be described with reference to the drawings. In all the drawings, the same or corresponding components are denoted by the same reference numerals, and the common description will be omitted.

< First example embodiment >

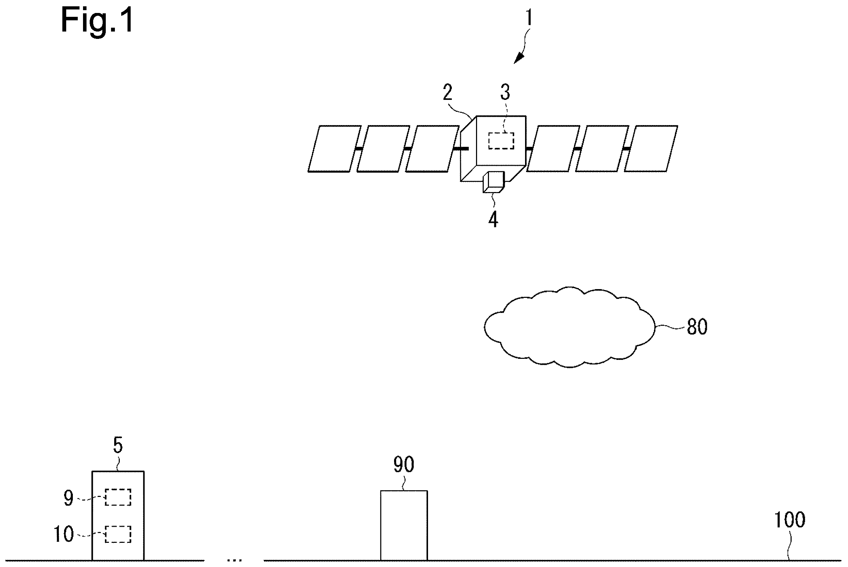

Hereinafter, an example embodiment according to the present disclosure will be described with reference to the drawings. As illustrated in Fig. 1, the image processing system 1 includes an artificial satellite 2 (hereinafter, simply referred to as a satellite 2), a control device 3, an imaging device 4, a ground station device 9, and an image processing device 10. The satellite 2 moves, for example, along the earth's orbit. The control device 3 and the imaging device 4 are provided in the satellite 2, and operate by receiving power supply from a solar battery (not illustrated) provided in the satellite 2. The ground station device 9 and the image processing device 10 are provided, for example, in a building of the ground station 5 of the satellite 2.

The control device 3 and the ground station device 9 transmit and receive signals and data to and from each other by wireless communication. The ground station device 9 is, for example, a device that remotely controls the satellite 2 in response to an operation of a user. The ground station device 9 stores various types of information including information indicating the orbit of the satellite 2 (hereinafter, referred to as orbit information) and information relating to the imaging device 4 included in the satellite 2 in an internal storage area. The control device 3 controls the satellite 2, for example, by receiving a control signal transmitted by the ground station device 9 or autonomously. The control device 3 transmits data such as a satellite image imaged and generated by the imaging device 4 to the ground station device 9.

(Configuration of imaging device)

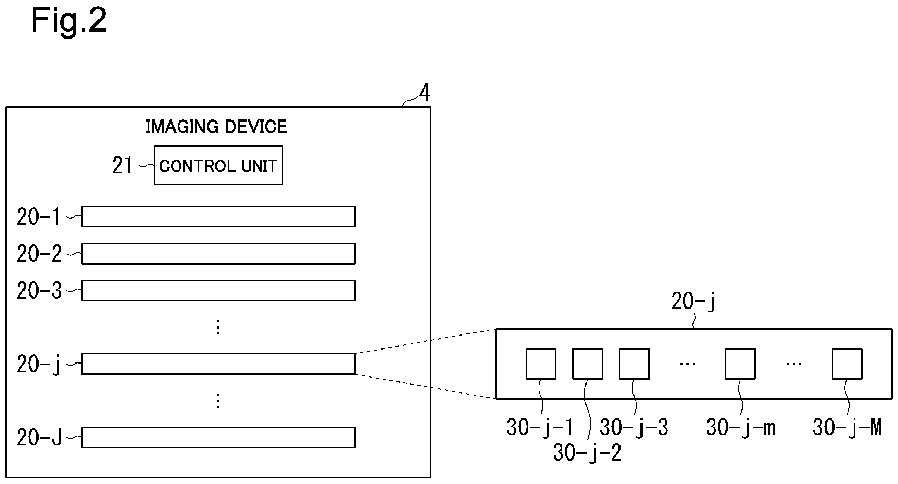

The imaging device 4 is, for example, a passive visible-optical multiband sensor, and generates satellite image data by imaging. For example, as illustrated in Fig. 2, the imaging device 4 includes J line sensors 20-1, 20-2, ..., and 20-J (here, J is an integer of two or more) arranged side by side in parallel in such a way that the positions of both ends are aligned, and a control unit 21.

Each of the line sensors 20-1 to 20-J is an imaging means for retrieving visible light in different wavelength bands to perform imaging. In order to perform imaging in different wavelength bands of visible light, a band pass filter that transmits light beam in each wavelength band to be imaged is provided in front of each light receiving surface of the line sensor 20-1 to 20-J.

A configuration of a charge coupled device (CCD) element included in the line sensors 20-1 to 20-J is the same, and as an example, a configuration of a line sensor 20-j (where j is any integer between 1 and J), which is an arbitrary one of the line sensors 20-1 to 20-J, will be described. As illustrated in Fig. 2, the line sensor 20-j is a sensor in which M CCD elements 30-j-1, 30-j-2, ..., 30-j-M (where M is an integer of two or more) are arranged in a line. M is, for example, a value such as "2024". Each of the CCD elements 30-j-1 to 30-j-M is a CCD element of one pixel. Hereinafter, in a case where one arbitrary CCD element in the line sensors 20-1 to 20-J is indicated, it is referred to as a CCD element 30-j-m (where m is any integer between 1 and M).

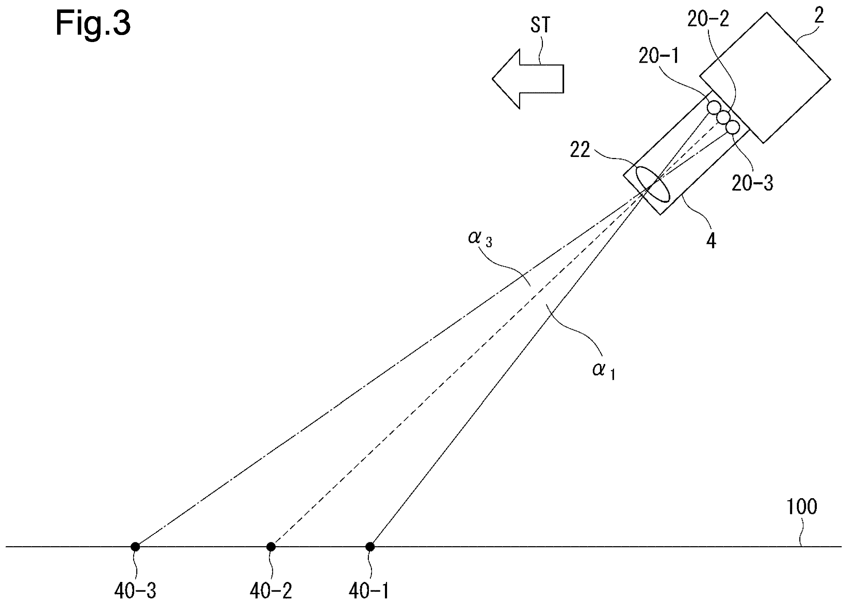

The control unit 21 causes each of the line sensors 20-1 to 20-J to perform imaging and acquires data output from each of the line sensors 20-1 to 20-J. For example, as illustrated in Fig. 3, the imaging device 4 includes a lens 22 arranged at a position where a light beam incident from the outside is image-formed on each light receiving surface of the line sensors 20-1 to 20-J, that is, the pixel of the CCD element 30-j-m. That is, a light beam incident from the outside transmits through the lens 22, transmits through each band pass filter of the line sensors 20-1 to 20-J, and forms an image on the pixel of each CCD element 30-j-m of the line sensors 20-1 to 20-J. Each of the CCD elements 30-j-m receives a light beam image-formed at each pixel and accumulates a charge.

For example, when an imaging instruction signal is applied from the control device 3 to the imaging device 4, the control unit 21 of the imaging device 4 receives the imaging instruction signal. Upon receiving the imaging instruction signal, the control unit 21 repeatedly supplies the pulse signal to each of the line sensors 20-1 to 20-J in parallel at regular intervals for a predetermined imaging time defined in advance. Each time the pulse signal is received, each of the line sensors 20-1 to 20-J supplies a read pulse signal in parallel to all the CCD elements 30-j-m included in each. When receiving the read pulse signal, each of the CCD elements 30-j-m reads the charges accumulated in each pixel, and outputs the amount of read charge as a pixel value for forming an image.

Each of the line sensors 20-1 to 20-J outputs the pixel value output from each CCD element 30-j-m to the control unit 21 in the order of arrangement of the CCD elements 30-j-m. When outputting the last pulse signal in the predetermined imaging time, the control unit 21 retrieves the pixel value lastly output by each of the line sensors 20-1 to 20-J, and generates image data for each of the line sensors 20-1 to 20-J by arranging all the pixel values retrieved during the predetermined imaging time for each of the line sensors 20-1 to 20-J according to the arrangement order of the CCD elements 30-j-m and the time series order. Upon receiving one imaging instruction signal, the control unit 21 generates one piece of satellite image data by collecting J pieces of image data obtained based on the imaging instruction signal. Since each piece of image data included in the satellite image data is imaged in different wavelength bands, the satellite image data becomes the satellite image data imaged in multiple bands.

When providing the imaging instruction signal to the imaging device 4, the control device 3 acquires time from a clocking means such as a clock provided inside, and includes the acquired time in the imaging instruction signal. When receiving the imaging instruction signal, the control unit 21 acquires the time included in the imaging instruction signal as the generation time, and includes the generation time in the satellite image data.

The control unit 21 associates sensor identification information that is information for specifying the corresponding line sensor 20-1 to 20-J with each of the J pieces of image data included in the satellite image data. Here, the line sensors 20-1 to 20-J corresponding to each of the J pieces of image data are the line sensor 20-1 to 20-J that output a pixel value forming each of the J pieces of image data. The sensor identification information for each of the line sensors 20-1 to 20-J associated with each of the J pieces of image data is generated in advance and recorded in advance in an internal storage area of the control unit 21, and the control unit 21 performs the association with reference to the internal storage area.

The control unit 21 includes, in the satellite image data, information indicating the arrangement order of the line sensors 20-1 to 20-J stored in an internal storage area. The information indicating the arrangement order of the line sensors 20-1 to 20-J is information indicated by sensor identification information corresponding to each of the line sensors 20-1 to 20-J, and is recorded in advance in an internal storage area of the control unit 21.

Next, with reference to Figs. 3 to 9A to 9C, differences in image data generated by the control unit 21 based on pixel values output from each of the line sensors 20-1 to 20-J will be described. Here, as an example, a case where J = 3, that is, a case where the imaging device 4 includes the line sensors 20-1, 20-2, and 20-3 will be described. As illustrated in Fig. 2, the line sensors 20-1 to 20-3 are arranged at positions shifted little by little in the imaging device 4. Therefore, as illustrated in Fig. 3, at a certain time, points on the ground 100 image-formed on each of the line sensors 20-1 to 20-3 by the lens 22 are different positions such as points 40-1, 40-2, and 40-3.

In Fig. 3, the direction of the solid line from the line sensor 20-1 toward the point 40-1 is the line-of-sight direction of the line sensor 20-1. The direction of the broken line from the line sensor 20-2 toward the point 40-2 is the line-of-sight direction of the line sensor 20-2. The direction of the alternate long and short dash line from the line sensor 20-3 toward the point 40-3 is the line-of-sight direction of the line sensor 20-3.

These line-of-sight directions are represented by, for example, angles formed by the direction of the optical axis of the optical system of the imaging device 4 and each of the line-of-sight directions. For example, in a case where the direction of the optical axis of the optical system of the imaging device 4 coincides with the line-of-sight direction of the line sensor 20-2, $\alpha_2$, which is the angle of the line-of-sight direction of the line sensor 20-2, is "0°". $\alpha_1$, which is an angle of the line-of-sight direction of the line sensor 20-1, is an angle obtained by attaching a minus sign to an angle formed by the line-of-sight direction of the line sensor 20-2 and the line-of-sight direction of the line sensor 20-1. $\alpha_3$, which is an angle of the line-of-sight direction of the line sensor 20-3, is an angle obtained by attaching a plus sign to an angle formed by the line-of-sight direction of the line sensor 20-2 and the line-of-sight direction of the line sensor 20-3.

Assuming that the control device 3 provides an imaging instruction signal to the imaging device 4 at the position illustrated in Fig. 3, the start point of imaging by the line sensor 20-1 becomes point 40-1. The start point of imaging of the line sensor 20-2 is point 40-2. The start point of imaging of the line sensor 20-3 is point 40-3. As described above, the satellite 2 moves along the earth's orbit, which moving direction is the direction of the arrow ST in Fig. 3. While the line sensors 20-1 to 20-3 repeat imaging repeatedly in accordance with the imaging instruction signal, the position of the satellite 2 moves in the direction of the arrow ST.

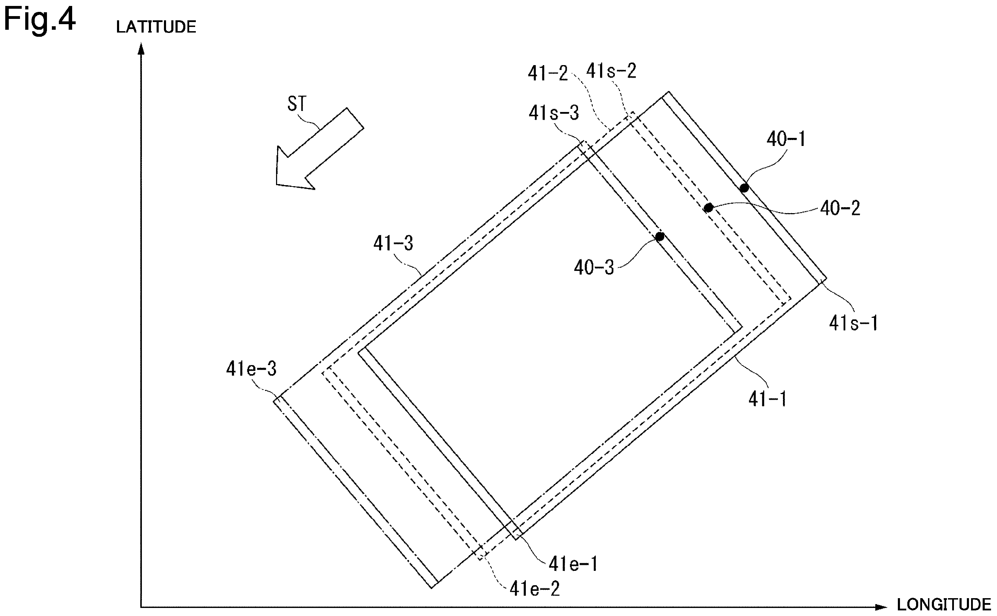

Here, when three pieces of image data 41-1, 41-2, and 41-3 generated by the control unit 21 based on the pixel values output from each of the line sensors 20-1 to 20-3 are superimposed in such a way that the latitude and the longitude coincide with each other, a positional relationship as illustrated in Fig. 4 is obtained. Here, the direction of the arrow ST is assumed to be a direction orthogonal to the longitudinal direction of each of the line sensors 20-1 to 20-J illustrated in Fig. 2. In this case, as illustrated in Fig. 4, the shapes of the image data 41-1, 41-2, and 41-3 are rectangular. In Fig. 4, a solid line graphic indicates a range of the image data 41-1 generated by imaging of the line sensor 20-1. A broken line graphic indicates a range of the image data 41-2 generated by imaging of the line sensor 20-2. An alternate long and short dash line graphic indicates a range of the image data 41-3 generated by imaging of the line sensor 20-3.

As illustrated in Fig. 4, in the longitudinal direction of the image data 41-1 to 41-3, a position shift that matches the interval of the points 40-1, 40-2, and 40-3 occurs. This is caused by a difference in the arrangement positions of the line sensors 20-1 to 20-3 on the focal plane of the lens 22, in other words, a difference in the line-of-sight direction of the line sensors 20-1 to 20-3. In Fig. 4, the short direction of the image data 41-1 to 41-3 is slightly shifted for the sake of easy visibility, but as illustrated in Fig. 2, the line sensors 20-1 to 20-3 are arranged in parallel in such a way that the positions of both ends are aligned, and hence no position shift occurs in the short direction.

In Fig. 4, the line image data 41s-1 including the point 40-1 is generated by M pixel values first output by the line sensor 20-1 at a predetermined imaging time. The line image data 41e-1 is generated by M pixel values lastly output by the line sensor 20-1 at a predetermined imaging time. The line image data 41s-2 including the point 40-2 is generated by M pixel values first output by the line sensor 20-2 at a predetermined imaging time. The line image data 41e-2 is generated by M pixel values lastly output by the line sensor 20-2 at a predetermined imaging time. The line image data 41s-3 including the point 40-3 is generated by M pixel values first output by the line sensor 20-3 at a predetermined imaging time. The line image data 41e-3 is generated by M pixel values lastly output by the line sensor 20-3 at a predetermined imaging time.

Although not illustrated in Fig. 4, a plurality of pieces of line image data generated during a predetermined imaging time exist between the line image data 41s-1 and the line image data 41e-1, between the line image data 41s-2 and the line image data 41e-2, and between the line image data 41s-3 and the line image data 41e-3, and the number thereof is the same number in the image data 41-1, 41-2, and 41-3.

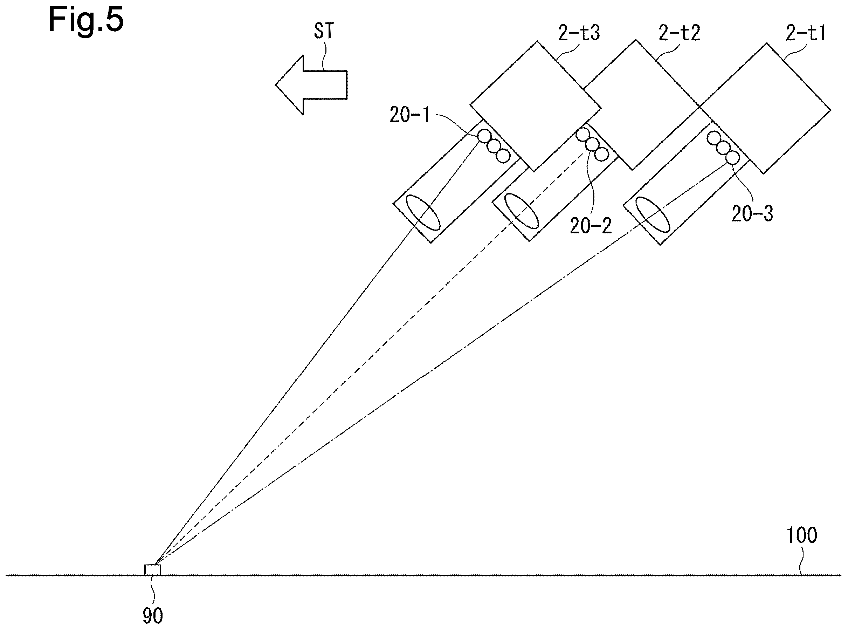

Next, as illustrated in Fig. 5, a difference in timing at which the line sensors 20-1 to 20-3 image a building 90 when the building 90 exists on the ground 100 will be described. Satellites 2-t1, 2-t2, and 2-t3 indicate the position of the satellite 2 at times t1, t2, and t3, respectively. Time t3 is a time after time t2, and time t2 is a time after time t1. At time t1, an image of the building 90 is formed on the line sensor 20-3.

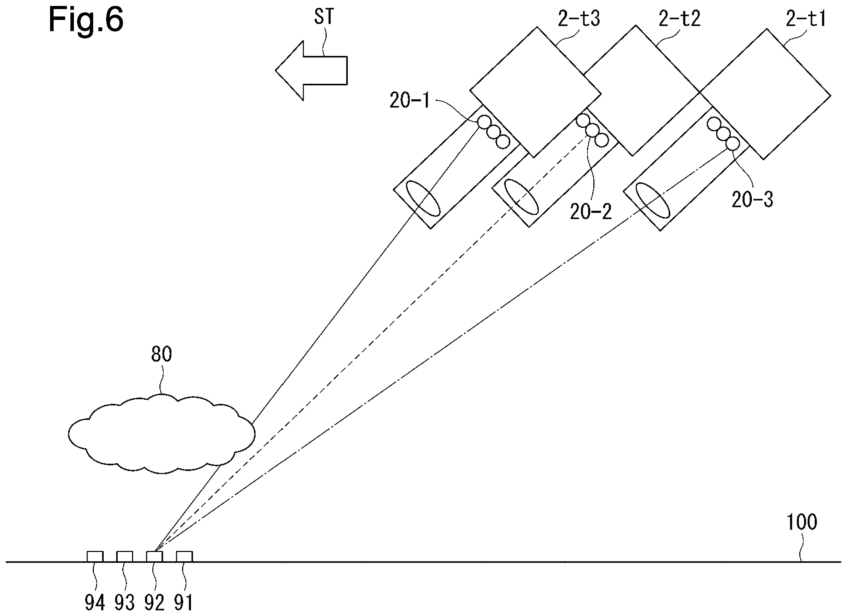

At time t2, an image of the building 90 is formed on the line sensor 20-2. At time t3, an image of the building 90 is formed on the line sensor 20-1. As described above, the timings at which the building 90, which is the same target, is imaged by the line sensors 20-1 to 20-3 are different. Therefore, a phenomenon as illustrated in Figs. 6 to 8 is observed.

Figs. 6 to 8 illustrate a state in which four buildings 91, 92, 93, and 94 exist on the ground 100 and a cloud 80 is floating in the air. In Fig. 6, a building 92 is installed at the position of the building 90 in Fig. 5 instead of the building 90. In this case, as illustrated in Fig. 6, an image of the building 92 is formed on the line sensor 20-3 at time t1. At time t2, an image of the building 92 is formed on the line sensor 20-2. On the other hand, at time t3, the position of the line sensor 20-1 is the position where the building 92 is image-formed, but the reflected light of the building 92 is shielded by the cloud 80. Therefore, an image of the building 92 is not formed on the line sensor 20-1, and an image of the cloud 80 is formed on the line sensor 20-1.

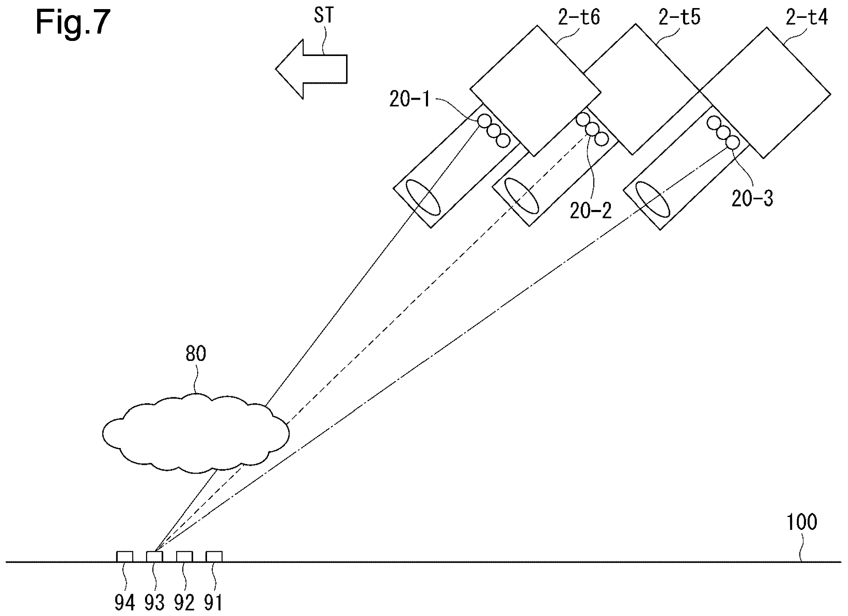

Next, in Fig. 7, satellites 2-t4, 2-t5, and 2-t6 indicate the position of the satellite 2 at times t4, t5, and t6, respectively. Time t6 is a time after time t5, and time t5 is a time after time t4. At time t4, an image of the building 93 is formed on the line sensor 20-3. On the other hand, at each of times t5 and t6, the positions of the line sensors 20-2 and 20-1 are positions where the building 93 is image-formed, but the reflected light of the building 93 is shielded by the cloud 80. Therefore, an image of the building 93 is not formed on the line sensors 20-2 and 20-1, and an image of the cloud 80 is formed.

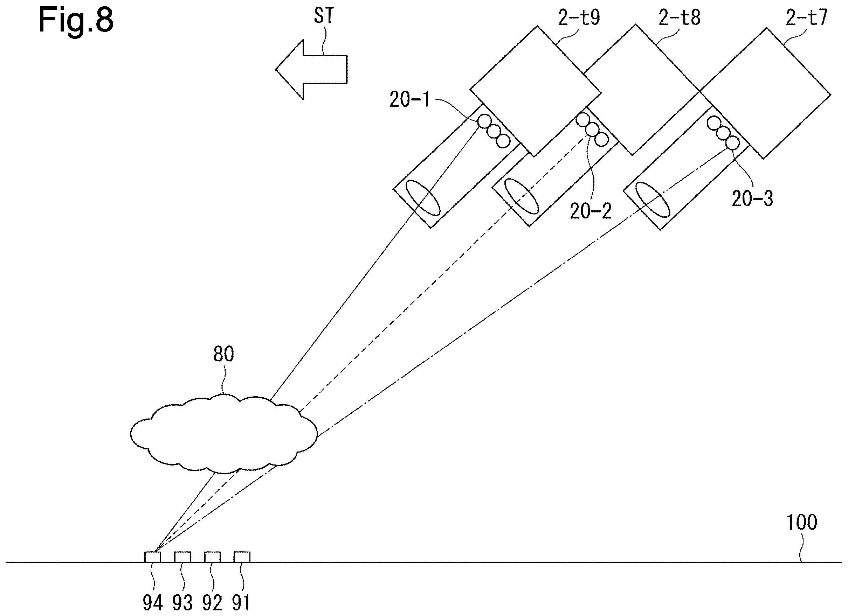

Next, in Fig. 8, satellites 2-t7, 2-t8, and 2-t9 indicate the position of the satellite 2 at times t7, t8, and t9, respectively. Time t9 is a time after time t8, and time t8 is a time after time t7. At each of times t7, t8 and t9, the positions of the line sensors 20-3, 20-2 and 20-1 are positions where the building 94 is image-formed, but the reflected light of the building 94 is shielded by the cloud 80. Therefore, an image of the building 94 is not formed on the line sensors 20-3, 20-2, and 20-1, and an image of the cloud 80 is formed.

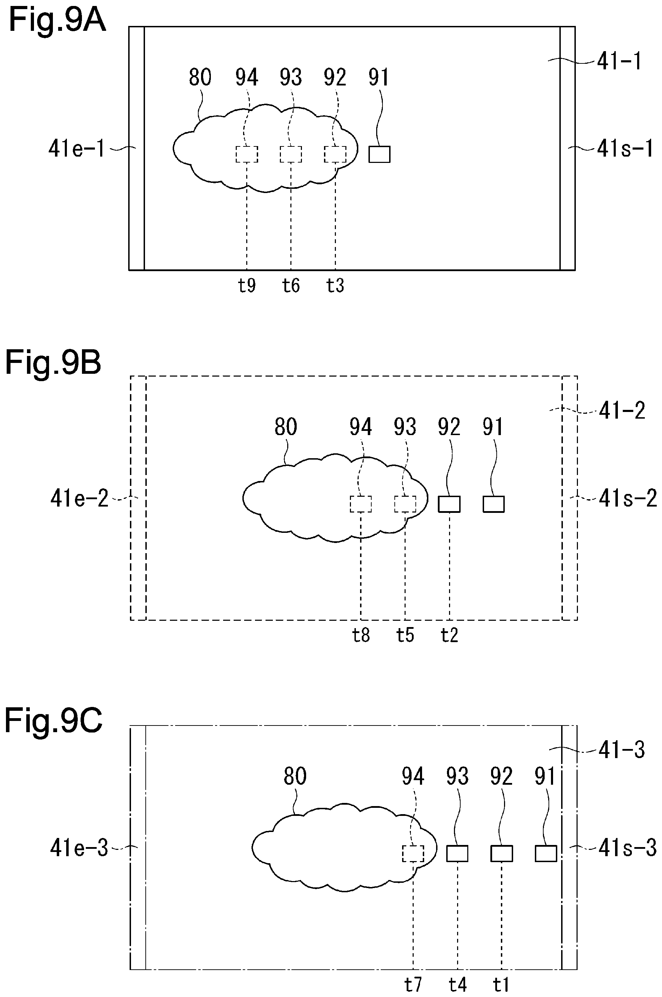

The buildings 91 to 94 and the cloud 80 appearing in the image data 41-1, 41-2, and 41-3 respectively corresponding to the line sensors 20-1 to 20-3 imaged at the timings illustrated in Figs. 6 to 8 have a positional relationship as illustrated in Figs. 9A to 9C. In the image data 41-1 to 41-3 in Figs. 9A to 9C, dotted lines indicating the timings of the times t1 to t9 are illustrated, but these dotted lines are not included in the image data 41-1 to 41-3.

As illustrated in Fig. 9A, the building 91 appears in the image data 41-1 corresponding to the line sensor 20-1, but the buildings 92 to 94 are in a state of being hidden by the cloud 80 as indicated by a broken line. As illustrated in Fig. 9B, the buildings 91 and 92 appear in the image data 41-2 corresponding to the line sensor 20-2, but the buildings 93 and 94 are in a state of being hidden by the cloud 80 as indicated by a broken line. As illustrated in Fig. 9C, the buildings 91, 92, and 93 appear in the image data 41-3 corresponding to the line sensor 20-3, but the building 94 is in a state of being hidden by the cloud 80 as indicated by a broken line.

Therefore, as illustrated in Fig. 4, when Figs. 9A, 9B, and 9C are superimposed in such a way that the latitude and the longitude coincide with each other, the positions of the buildings 91 to 94 appearing in the image data 41-1, 41-2, and 41-3 coincide with each other, but position shift occurs for the cloud 80. That is, in the image data 41-1, 41-2, and 41-3, for example, an absolute positional shift such as a positional shift of the building 91 occurs due to parallax that is a difference in the line-of-sight directions of the line sensors 20-1 to 20-3. In addition to this absolute positional shift, the parallax causes a relative positional shift in which the position of the cloud 80 existing at an altitude at which the distance to the satellite 2 is shorter than that of the buildings 91 to 94 is shifted when the positions of the buildings 91 to 94 are used as a reference. Therefore, by measuring the relative positional shift of the cloud 80, the position of the depth of the cloud 80, which is the subject, that is, the altitude of the cloud 80 can be estimated with the same principle as the stereoscopic vision using the stereo pair image.

Figs. 6 to 8 illustrate that the position of the cloud 80 is stationary at any time t1 to t9, but in practice, the position of the cloud 80 varies as the time changes. However, since the moving speed of the satellite 2 is very high as compared with the moving speed of the cloud 80, it is assumed here that the cloud 80 is stationary during imaging by one imaging instruction signal in the imaging device 4.

(Configuration of image processing device)

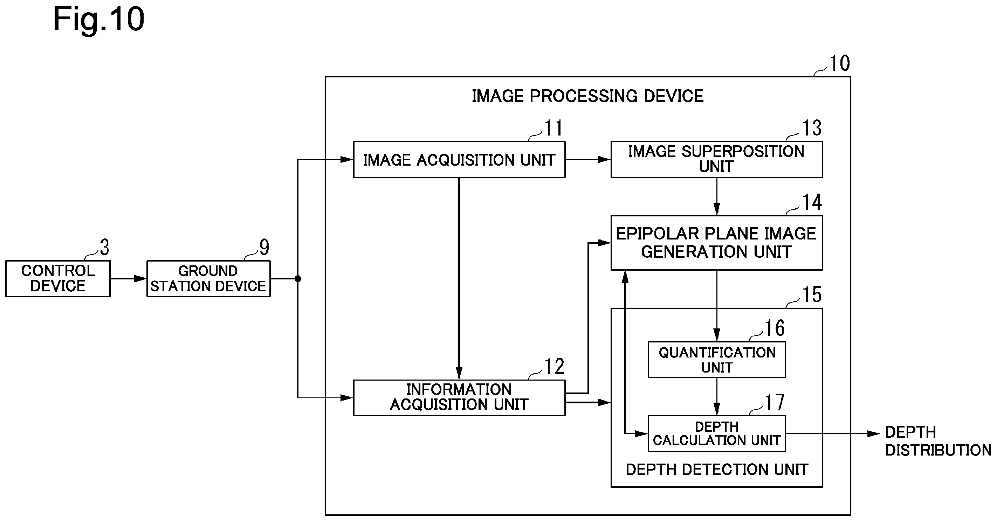

Fig. 10 is a diagram illustrating an internal configuration of the image processing device 10, a connection relationship between the image processing device 10 and a ground station device 9, and a connection relationship between the ground station device 9 and the control device 3. The image processing device 10 includes an image acquisition unit 11, an information acquisition unit 12, an image superimposition unit 13, an epipolar plane image generation unit 14, and a depth detection unit 15.

The image acquisition unit 11 is connected to the ground station device 9 and acquires satellite image data from the ground station device 9. The image acquisition unit 11 acquires combinations of the J pieces of image data and the sensor identification information, information indicating the arrangement order of the line sensors 20-1 to 20-J, and the generation time from the acquired satellite image data.

The information acquisition unit 12 is connected to the ground station device 9, and acquires, from the ground station device 9, the orbit information of the satellite 2 stored in the internal storage area by the ground station device 9 and the information indicating the line-of-sight direction of each of the line sensors 20-1 to 20-J. Each piece of information indicating the line-of-sight direction of each of the line sensors 20-1 to 20-J is associated with corresponding sensor identification information in advance. The orbit information of the satellite 2 includes information indicating the position of the satellite 2 and the speed of the satellite 2 in time series. The order in time series is indicated in association with time. Based on the time of the clocking means provided inside the control device 3 of the satellite 2, with reference to the orbit information, the time of the clocking means provided inside the control device 3 is set in advance such that the accurate position of the satellite 2 and the speed of the satellite 2 at the time can be obtained. The information indicating the line-of-sight direction of each of the line sensors 20-1 to 20-J is information indicating the line-of-sight direction by an angle as described above.

In each of the J pieces of image data acquired by the image acquisition unit 11, the image superimposition unit 13 superimposes the image data by performing alignment in such a way as to eliminate the absolute positional shift caused by a difference in the line-of-sight directions of the line sensor 20-1 to 20-J. In order to perform this alignment, for example, the image superimposition unit 13 projects each of the J pieces of image data onto a predetermined geodetic system. Here, the predetermined geodetic system is, for example, a world geodetic system (WGS) 84 ellipsoid. By performing projection onto a predetermined geodetic system, the latitude and longitude of each pixel of each of the J pieces of image data are specified, and the specified latitude and longitude are associated with each pixel of the J pieces of image data. The image superimposition unit 13 superimposes while coinciding the latitude and longitude of the J pieces of image data.

The epipolar plane image generation unit 14 detects overlapping portions of the J pieces of image data superimposed by the image superimposition unit 13. The epipolar plane image generation unit 14 selects a transverse line that transverses the detected overlapping portion along a direction in which the ranges of each of the J pieces of image data in the superimposed state are shifted. The direction in which the ranges of each of the J pieces of image data in the superimposed state are shifted is the moving direction of the satellite 2. The epipolar plane image generation unit 14 extracts image data of a portion where the selected transverse line and the overlapping portion overlap.

The epipolar plane image generation unit 14 generates epipolar plane image data by arranging each piece of image data of the portion where the transverse line and the overlapping portion overlap in the order determined by the magnitudes of the inclinations in the line-of-sight directions of the line sensors 20-1 to 20-J that have generated each piece of image data. The order determined by the magnitudes of the inclinations of the line-of-sight directions of the line sensors 20-1 to 20-J is the arrangement order of the line sensors 20-1 to 20-J. For example, in the example described with reference to Fig. 3, the line-of-sight direction angle $\alpha_1$ of the line sensor 20-1 is a negative numerical value, the line-of-sight direction angle $\alpha_2$ of the line sensor 20-2 is "0°", and the line-of-sight direction angle $\alpha_3$ of the line sensor 20-3 is a positive numerical value. In this case, arranging the line sensor 20-1, the line sensor 20-2, and the line sensor 20-3 in this order means arranging them in order from the smaller inclination in the line-of-sight direction.

The depth detection unit 15 includes a quantification unit 16 and a depth calculation unit 17, and detects the depth of the subject appearing in the image data from the streak pattern appearing in the epipolar plane image data. The quantification unit 16 quantifies the line forming the streak pattern based on the information indicating the line-of-sight direction of each of the line sensors 20-1 to 20-J acquired by the information acquisition unit 12 and the lines forming the streak pattern appearing in the epipolar plane image data generated by the epipolar plane image generation unit 14.

The depth calculation unit 17 acquires information indicating the altitude of the satellite 2 specified from the orbit information acquired by the information acquisition unit 12 and the generation time acquired by the image acquisition unit 11. The depth calculation unit 17 calculates the absolute depth, that is, the altitude of the subject such as the building 90 or the cloud 80 appearing in the image data based on the acquired information indicating the altitude and the value obtained by the quantification of the quantification unit 16. The depth calculation unit 17 outputs a distribution of the calculated depth as a depth distribution.

< Processing of first example embodiment >

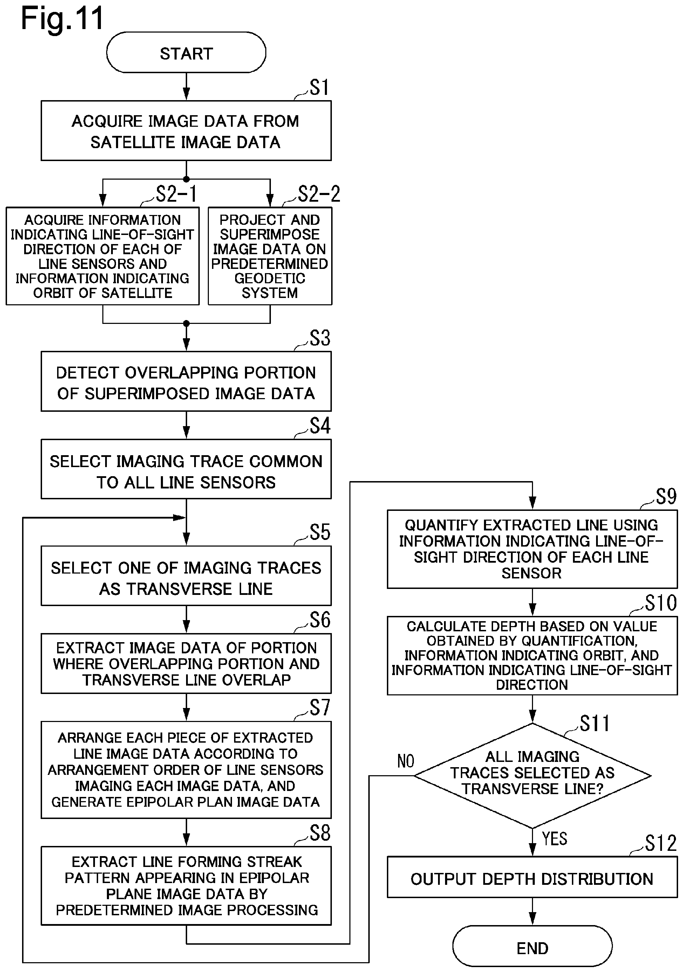

Hereinafter, processing by the image processing device 10 will be described with reference to Figs. 11 to 13. In the following description, the pixel value output by the line sensor 20-j is represented by I(j; m, n). In I(j; m, n), "j" is the sensor identification information described above, and "j" is any integer between 1 and J. "m" is a pixel number, that is, a number specifying the pixel, and corresponds to "m" used in the symbol of the CCD element 30-j-m. "m" is any integer between 1 and M, as described above. "n" is a line number, and "n" is any integer between 0 and (N-1). "N" is the number of line image data included in the image data 41-j generated by imaging of the line sensor 20-j. For example, in the image data 41-1 illustrated in Fig. 4, n=0 corresponds to the line image data 41s-1, and n=N-1 corresponds to the line image data 41e-1. Therefore, when "j", "m", and "n" in I(j; m, n) are defined, the pixel value of one pixel included in the satellite image data is specified.

When the control unit 21 of the imaging device 4 receives the imaging instruction signal from the control device 3 and generates satellite image data as described above, the control unit 21 outputs the generated satellite image data to the control device 3. After retrieving the satellite image data output from the control unit 21, the control device 3 transmits the retrieved satellite image data to the ground station device 9. The ground station device 9 receives the satellite image data transmitted by the control device 3, and records the received satellite image data in an internal storage area. In this state, the processing by the image processing device 10 illustrated in Fig. 11 is started.

For example, upon receiving an operation of the user of the image processing device 10, the image acquisition unit 11 outputs a signal requesting for satellite image data to the ground station device 9. When receiving the signal from the image acquisition unit 11, the ground station device 9 reads the satellite image data from an internal storage area and outputs the satellite image data to the image acquisition unit 11. After retrieving the satellite image data output from the ground station device 9, the image acquisition unit 11 acquires combinations of J pieces of image data and sensor identification information, information indicating the arrangement order of the line sensors 20-1 to 20-J, and generation time from the retrieved satellite image data. The image acquisition unit 11 outputs the combinations of the J pieces of image data and the sensor identification information, and the information indicating the arrangement order of the line sensors 20-1 to 20-J to the image superimposition unit 13. The image acquisition unit 11 outputs the generation time to the information acquisition unit 12 (S1).

After retrieving the generation time output from the image acquisition unit 11, the information acquisition unit 12 outputs a signal requesting for orbit information of the satellite 2 and information indicating the line-of-sight direction of each of the line sensors 20-1 to 20-J to the ground station device 9. When receiving the signal from the information acquisition unit 12, the ground station device 9 reads the orbit information of the satellite 2 and the information indicating the line-of-sight direction of each of the line sensors 20-1 to 20-J from the internal storage area, and outputs the information to the information acquisition unit 12. The information acquisition unit 12 retrieves the orbit information of the satellite 2 and the information indicating the line-of-sight direction of each of the line sensors 20-1 to 20-J output from the ground station device 9. The information acquisition unit 12 specifies the retrieved generation time and the position and speed of the satellite 2 at times before and after the generation time from the retrieved orbit information. The information acquisition unit 12 calculates the moving direction of the satellite 2 and the altitude of the satellite 2 at the generation time based on the specified position and speed of the satellite 2. The information acquisition unit 12 outputs information indicating the calculated moving direction of the satellite 2 to the epipolar plane image generation unit 14. The information acquisition unit 12 outputs the acquired information indicating the line-of-sight direction of each of the line sensors 20-1 to 20-J to the quantification unit 16. The information acquisition unit 12 outputs information indicating the calculated altitude of the satellite 2 to the depth calculation unit 17 (S2-1).

The image superimposition unit 13 retrieves combinations of the J pieces of image data and the sensor identification information output from the image acquisition unit 11 and information indicating the arrangement order of the line sensors 20-1 to 20-J. The image superimposition unit 13 projects each of the J pieces of image data onto a predetermined geodetic system, and superimposes the image data such that the latitude and longitude of each of the J pieces of image data coincide with each other. As a result, for example, in the case of J = 3, the image data 41-1, 41-2, and 41-3 are superimposed in a state where the positions of the building 91 coincide with each other in the image data 41-1, 41-2, and 41-3 illustrated in Figs. 9A to 9C, and the positions of the buildings 91, 92 coincide with each other in the image data 41-2 and 41-3. The superimposition by the image superimposition unit 13 may be performed in the order following the arrangement order of the line sensors 20-1 to 20-J, or may be performed in the order not following the arrangement order. The image superimposition unit 13 outputs the image data in a superimposed state (hereinafter, referred to as superimposed image data), the sensor identification information associated with each piece of image data, and the information indicating the arrangement order of the line sensors 20-1 to 20-J to the epipolar plane image generation unit 14 (S2-2).

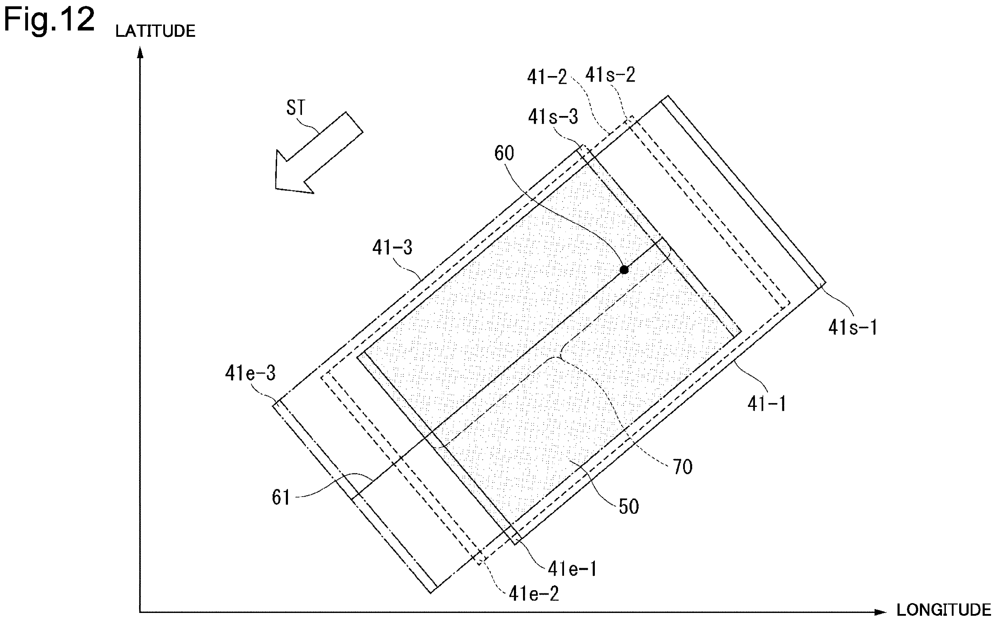

The epipolar plane image generation unit 14 retrieves the superimposed image data output from the image superimposition unit 13, the sensor identification information associated with each piece of image data included in the superimposed image data, and the information indicating the arrangement order of the line sensors 20-1 to 20-J. The epipolar plane image generation unit 14 retrieves the information indicating the moving direction of the satellite 2 output by the information acquisition unit 12 in the processing of S2-1. The epipolar plane image generation unit 14 detects an overlapping portion which is a portion common to all the image data 41-1 to 41-J in the retrieved superimposed image data. For example, in the case of J = 3, it is assumed that the image data 41-1 to 41-3 forming the superimposed image data are superimposed in the arrangement illustrated in Fig. 12. In this case, the epipolar plane image generation unit 14 detects a hatched portion indicated by reference numeral 50 as an overlapping portion (S3).

The epipolar plane image generation unit 14 defines imaging points in the superimposed image data. Here, the imaging point is a position in the image data 41-j corresponding to the center point of the pixel of the $J \times M$ CCD elements 30-j-m included in the line sensor 20-1 to 20-J. The imaging point is specified by latitude and longitude obtained by projecting the position of the center point of the pixel of the CCD element 30-j-m onto a predetermined geodetic system. In the superimposed image data, the imaging point exists by the number of combinations (j; m, n), that is, $J \times M \times N$. Hereinafter, the coordinates of the imaging point are represented by (latitude$_{j; m, n}$, longitude$_{j; m, n}$). The epipolar plane image generation unit 14 detects a direction indicated by the information indicating the moving direction of the satellite 2 that has been retrieved, and a trajectory (hereinafter, this trajectory is referred to as a photographing trace) when the imaging point has moved in a direction opposite to the direction.

For example, it is assumed that the epipolar plane image generation unit 14 sets a point denoted by a reference numeral 60 illustrated in Fig. 12 in the image data 41-3 as an imaging point (hereinafter, referred to as an imaging point 60), and the coordinates of the imaging point 60 are (latitude$_{3; 1000,10}$, longitude$_{3; 1000,10}$) expressed using j = 3, m = 1000, and n = 10. In this case, the epipolar plane image generation unit moves the coordinates of the imaging point to a position existing in the direction indicated by the information indicating the moving direction of the satellite 2 that has been retrieved and the direction opposite to the direction and included in each of the N pieces of line image data forming the image data 41-3.

The image data 41-3 is image data obtained by moving the line sensor 20-3 in accordance with the moving direction of the satellite 2. Therefore, when the coordinates of the imaging point are moved in accordance with the moving direction of the satellite 2, the value of "n" that is the line number changes, but the value of "m" that is the pixel number does not change. Therefore, a set of coordinates of the N points including the coordinates of the imaging point is expressed as {(latitude$_{3; 1000,n}$, longitude$_{3; 1000,n}$) where n = 0, ..., N-1}. The imaging trace 61 corresponding to the imaging point 60 is specified by the set of coordinates {(latitude$_{3; 1000, n}$, longitude$_{3; 1000, n}$) where n = 0, ..., N-1}.

The epipolar plane image generation unit 14 detects a set of coordinates specifying each of the $J \times M$ imaging traces specified from each of the $J \times M \times N$ imaging points. The epipolar plane image generation unit 14 selects an imaging trace common to the image data 41-1 to 41-J from among the detected $J \times M$ imaging traces. Here, the imaging trace common in the image data 41-1 to 41-J is the imaging trace in which all the coordinates in the range of the overlapping portion coincide with each other in the imaging traces of each piece of image data 41-1 to 41-J. Therefore, the imaging trace common in the image data 41-1 to 41-J is the imaging trace that transverses the overlapping portion in the direction along the moving direction of the satellite 2 (S4).

The epipolar plane image generation unit 14 selects any one of imaging trace that is not the processing target in the selected imaging traces as a transverse line (S5). The epipolar plane image generation unit 14 extracts image data of a portion where the transverse line and the overlapping portion overlap. For example, in the example illustrated in Fig. 12, it is assumed that the epipolar plane image generation unit 14 has selected the imaging trace 61 as the transverse line. In this case, the portion where the imaging trace 61 and the overlapping portion 50 overlap is a portion indicated by reference numeral 70 of the imaging trace 61 (hereinafter, this portion is referred to as an overlapping line 70). When the overlapping line 70 is indicated by a set of coordinates, it is indicated as {(latitude$_{3; 1000, n}$, longitude$_{3; 1000, n}$) where n = 0, ..., Ne}. Here, "Ne" is a line number in which the line image data of the image data 41-3 coinciding with the position of the last line image data 41e-1 of the image data 41-1 in Fig. 12 exists.

The epipolar plane image generation unit 14 extracts image data of a portion where the transverse line and the overlapping portion overlap. In the example illustrated in Fig. 12, the epipolar plane image generation unit 14 extracts the image data of the overlapping line 70. As described above, the overlapping line 70 is indicated as a set of coordinates (latitude$_{3; 1000,n}$, longitude$_{3; 1000,n}$) [where n = 1, ..., Ne], and the coordinates included in the set of coordinates exist in any of the image data 41-1, 41-2, and 41-3. Therefore, the epipolar plane image generation unit 14 detects the pixel value of each of the coordinates of the overlapping line 70 from each piece the image data 41-1, 41-2, and 41-3. The epipolar plane image generation unit 14 arranges the detected pixel values according to the order of arrangement of coordinates for each piece of image data 41-1, 41-2, and 41-3, and generates a combination including a plurality of pixel values. Hereinafter, a combination including the plurality of pixel values is referred to as an extraction line image data. The epipolar plane image generation unit 14 associates sensor identification information corresponding to each piece of the generated extraction line image data with each piece of the generated extraction line image data (S6).

The epipolar plane image generation unit 14 generates epipolar plane image data by arranging the extraction line image data in the arrangement order based on the information indicating the arrangement order of the line sensors 20-1 to 20-J retrieved in the processing of S3 and the sensor identification information associated with each of the extraction line image data. Arranging the extraction line image data in the arrangement order of the line sensors 20-1 to 20-J means arranging in the order defined by the magnitude of the inclination in the line-of-sight direction of the line sensors 20-1 to 20-J as described above. By arranging the extraction line image data in this order, a streak pattern having a different inclination for each subject appears in the epipolar plane image data according to the distance from the imaging position to the subject.

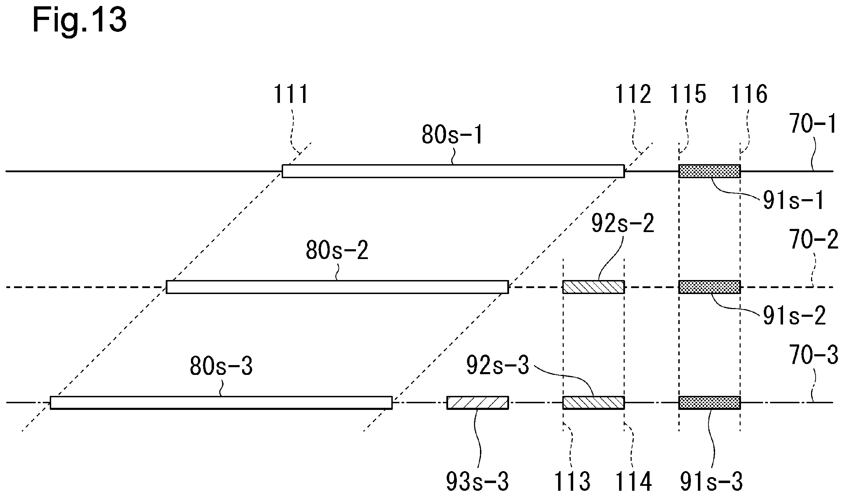

Fig. 13 is a diagram illustrating an example of epipolar generated image data generated in a case where an imaging trace passing through all of the buildings 91, 92, 93, and 94 and the cloud 80 illustrated in Figs. 9A, 9B, and 9C is selected as a transverse line. In Fig. 13, a color corresponding to each of the pixel values included in the extraction line image data extracted from the image data 41-1 is indicated on a solid line indicated by reference numeral 70-1. A color corresponding to each of the pixel values included in the extraction line image data extracted from the image data 41-2 is indicated on a broken line indicated by reference numeral 70-2. A color corresponding to each of the pixel values included in the extraction line image data extracted from the image data 41-3 is indicated on an alternate long and short dash line indicated by reference numeral 70-3. In a case where the pixel value is, for example, an integer value between 0 and 255, the color corresponding to the pixel value is any color of gray scale of 256 gradations.

As illustrated in Fig. 9A, the building 91 and the cloud 80 appear in the image data 41-1. Therefore, on a line with reference numeral 70-1 of Fig. 13, a portion 91s-1 corresponding to the portion of the building 91 is indicated by a gray scale color corresponding to the color of the building 91. The portion with reference numeral 80s-1 corresponding to the portion of the cloud 80 is indicated by a gray scale color corresponding to the color of the cloud 80. A portion with reference numeral 70-1 other than reference numerals 91s-1 and 80s-1 is indicated by, for example, a gray scale color corresponding to the color of the ground surface of the ground 100.

As illustrated in Fig. 9B, the buildings 91 and 92 and the cloud 80 appear in the image data 41-2. Therefore, on a line with reference numeral 70-2 of Fig. 13, a portion 91s-2 corresponding to the portion of the building 91 is indicated by a gray scale color corresponding to the color of the building 91. The portion with reference numeral 92s-2 corresponding to the portion of the building 92 is indicated by a gray scale color corresponding to the color of the building 92. The portion with reference numeral 80s-2 corresponding to the portion of the cloud 80 is indicated by a gray scale color corresponding to the color of the cloud 80. A portion with reference numeral 70-2 other than reference numerals 91s-2, 92s-2, and 80s-2 is indicated by, for example, a gray scale color corresponding to the color of the ground surface of the ground 100.

As illustrated in Fig. 9C, the buildings 91, 92 and 93 and the cloud 80 appear in the image data 41-3. Therefore, on a line with reference numeral 70-3 of Fig. 13, a portion 91s-3 corresponding to the portion of the building 91 is indicated by a gray scale color corresponding to the color of the building 91. The portion with reference numeral 92s-3 corresponding to the portion of the building 92 is indicated by a gray scale color corresponding to the color of the building 92. The portion with reference numeral 93s-3 corresponding to the portion of the building 93 is indicated by a gray scale color corresponding to the color of the building 93. The portion with reference numeral 80s-3 corresponding to the portion of the cloud 80 is indicated by a gray scale color corresponding to the color of the cloud 80. A portion with reference numeral 70-3 other than reference numerals 91s-3, 92s-3, 93s-3, and 80s-3 is indicated by, for example, a gray scale color corresponding to the color of the ground surface of the ground 100.

In Fig. 13, lines indicated by reference numerals 70-1, 70-2, and 70-3 are illustrated at intervals for the sake of clarity, but in the actual epipolar plane image data, the lines indicated by reference numerals 70-1, 70-2, and 70-3 are adjacent to each other without an interval. Therefore, a streak pattern appears at locations indicated by reference numerals 111 and 112 at both ends of the portions of reference numerals 80s-1, 80s-2, and 80s-3 corresponding to the cloud 80. Similarly, a streak pattern appears at locations indicated by reference numeral 113 and 114 at both ends of the portions of reference numerals 92s-2 and 92s-3 corresponding to the building 92. Similarly, a streak pattern appears at locations indicated by reference numeral 115 and 116 at both ends of the portions of reference numerals 91s-1, 91s-2, and 91s-3 corresponding to the building 91. Since the value of J is actually a large value and not a small value like J = 3, the length in the longitudinal direction of the epipolar plane image data becomes longer than that in the example illustrated in Fig. 13, so that the lines forming the streak pattern are more clearly seen. In this case, in a case where the building 93 is shown in other extraction line image data, there is a portion similar to the portion of reference numeral 93s-3, and thus a streak pattern also appears at both ends with reference numeral 93s-3.

Here, assume that each of the J pieces of extraction line image data forming the epipolar plane image data is expressed as EPI(j, p). The extraction line image data EPI(j, p) is defined by the following Equation (1) by using I(j; m, n) that is a pixel value of the image data 41-1 to 41-J.

$$EPI(j, p) = I(j; m_q, n_j) \ \dots \ (1)$$

In the right side of Equation (1), "$m_q$" is the pixel number of the pixel selected as the imaging point, and has a fixed value in the J pieces of extraction line image data EPI(j, p) forming one piece of epipolar plane image data. "$n_j$" is any integer between $Ns_j$ and $Ne_j$, and "$Ns_j$" is the line number of the starting point of the overlapping line in the image data 41-j corresponding to the line sensor 20-j. "$Ne_j$" is the line number of the ending point of the overlapping line in the image data 41-j corresponding to the line sensor 20-j. In the left side of Equation (1), j = 1 to J, p = $n_j$ - $Ns_j$, and "p" is any integer between 0 and ($Ne_j$ - $Ns_j$). Here, since the number obtained by adding "1" to "$Ne_j$ - $Ns_j$" matches the number of pixels included in the overlapping line, "$Ne_j$ -$Ns_j$+ 1" has the same value in all integers J. Hereinafter, the same value "$Ne_j$ - $Ns_j$ + 1" is represented by "Nt".

The epipolar plane image generation unit 14 outputs the generated epipolar plane image data, that is, the J pieces of extraction line image data EPI(j, p), "$m_p$", and "$Ns_j$" for all J to the quantification unit 16 (S7).

The quantification unit 16 retrieves the epipolar plane image data output from the epipolar plane image generation unit 14, "$m_p$", and "$Ns_j$" for all J. The quantification unit 16 extracts a line forming a streak pattern appearing in the epipolar plane image data by predetermined image processing (S8). Here, the predetermined image processing is, for example, a Hough transform method.

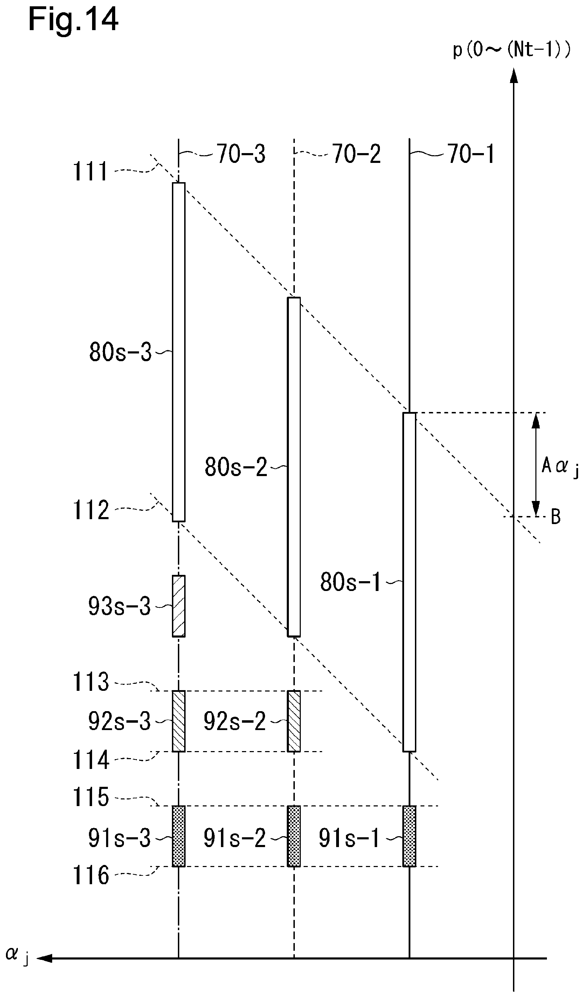

The quantification unit 16 retrieves information indicating the line-of-sight direction of each of the line sensors 20-1 to 20-J output by the information acquisition unit 12 in the processing of S2-1. The quantification unit 16 quantifies each of the extracted lines forming the streak pattern using information indicating the line-of-sight direction of each of the line sensors 20-1 to 20-J. Meanwhile, in Fig. 13, for the sake of convenience of explanation, the lines of the streak pattern indicated by reference numerals 111, 112, 113, 114, 115, 116 are indicated by a straight line, but these lines of the streak pattern do not become straight lines only by simply arranging the extraction line image data. In order to make the lines of the streak pattern appear as a straight line, as illustrated in Fig. 14, the extraction line image data needs to be projected onto a plane having the line-of-sight direction angle $\alpha_j$ as the horizontal axis and p as the vertical axis. In Fig. 14, the minimum value of the extraction line image data EPI(j, p) in the p-axis direction is "0", and the maximum value is "Nt-1". Thus, the lines of the streak pattern with reference numerals 111, 112, 113, 114, 115, 116 can be detected as a straight line. Therefore, in the predetermined image processing performed by the quantification unit 16, image processing of projecting the extraction line image data on a plane having the line-of-sight direction angle $\alpha_j$ as the horizontal axis and p as the vertical axis and then extracting a line of the streak pattern that has become a straight line is performed. When the extraction line image data is projected onto a plane having the line-of-sight direction angle $\alpha_j$ as the horizontal axis and p as the vertical axis, the line of the streak pattern appear as a straight line because there is a linear relationship between the value of p of the same subject and the value of the line-of-sight direction angle $\alpha_j$.

The quantification unit 16 detects a coefficient A and a coefficient B that satisfy the relationship of p = A$\alpha_j$ + B for each of the lines 111, 112, 113, 114, 115, 116 of the streak pattern extracted by the predetermined image processing according to any of the line-of-sight direction angles $\alpha_j$ included in the information indicating the line-of-sight direction of each of the retrieved line sensors 20-1 to 20-J. As illustrated in Fig. 14, in a plane in which the line-of-sight direction angle $\alpha_j$ is on the horizontal axis and p is on the vertical axis, the coefficient A is a coefficient indicating an inclination and the coefficient B is a coefficient indicating an intercept.

The values of the coefficient A and the coefficient B detected in this manner, $\alpha_j$ when the coefficient A and the coefficient B are detected, and j of the subscript of $\alpha_j$ are values obtained by quantifying each of the lines 111, 112, 113, 114, 115, 116 forming the streak pattern. Therefore, the quantification unit 16 outputs all combinations of the coefficient A, the coefficient B, $\alpha_j$, and j, which are values obtained by quantification, "$m_p$", and "$Ns_j$" for all J, to the depth calculation unit 17 (S9).

The depth calculation unit 17 retrieves all combinations of the coefficient A, the coefficient B, $\alpha_j$, and j, "$m_p$", and "$Ns_j$" for all J output by the quantification unit 16. The depth calculation unit 17 retrieves information indicating the altitude of the satellite 2 output by the information acquisition unit 12 in the processing of S2-1. The depth calculation unit 17 calculates the absolute depth for each combination, that is, the distance from the satellite 2 to the subject based on the coefficient A, $\alpha_j$ corresponding to the coefficient A, and the retrieved information indicating the altitude for each retrieved combination.

The depth calculated by the depth calculation unit 17 can be interpreted as the depth of the subject appearing at the position of (j; $m_p$, p + $Ns_j$) [where p = A$\alpha_j$ + B] specified using the coefficient A used for calculation, $\alpha_j$, "$m_p$", and "$Ns_j$" corresponding to the value of "j" included in the combination of "$\alpha_j$" used for calculation, and the coefficient B included in the combination of "$\alpha_j$" used for calculation. Therefore, the depth calculation unit 17 records the calculated depth as a value of the depth distribution DepthMap(j; $m_p$, A$\alpha_j$ + B + $Ns_j$) (S10).

The depth calculation unit 17 outputs the processing continuation instruction signal to the epipolar plane image generation unit 14. Upon receiving the processing continuation instruction signal from the depth calculation unit 17, the epipolar plane image generation unit 14 determines whether all the imaging traces selected in the processing of S4 are selected as the transverse lines (S11). When determining that all the imaging traces are not selected as the transverse lines (S11, No), the epipolar plane image generation unit 14 performs the processing of S5 again. On the other hand, when determining that all the imaging traces are selected as the transverse line (S11, Yes), the epipolar plane image generation unit 14 outputs a processing end notification signal to the depth calculation unit 17.

Upon receiving the processing end notification signal from the epipolar plane image generation unit 14, the depth calculation unit 17 outputs a depth distribution DepthMap(j; $m_p$, A$\alpha_j$ + B + Ns$_j$) (S12) and ends the process.

< Effects of first example embodiment >

By referring to the output depth distribution DepthMap(j; $m_p$, A$\alpha_j$ + B + Ns$_j$), the absolute depth of the subject appearing in each piece of image data 41-1 to 41-J generated by imaging by each of the line sensors 20-1 to 20-J, that is, the accurate distance from the satellite 2 to the subject can be grasped. In other words, the position in the depth direction of the subject appearing in the image data 41-1 to 41-J imaged and generated by the existing imaging device 4 can be distinguished without adding a device for imaging to the satellite 2 by using the image processing device 10. By referring to this depth, for example, in the case of the example illustrated in Figs. 9A to 9C, since the depth of the cloud 80 is smaller than the depths of the buildings 91 to 93 installed on the ground 100, it can be grasped that the cloud exists at a higher altitude than the ground 100.

Therefore, for example, a portion of ice and snow existing on the ground 100 and a portion of a cloud existing in the air can be segmented by setting an appropriate threshold value and dividing a region in the depth distribution DepthMap(j; $m_p$, A$\alpha_j$ + B + Ns$_j$).

< Second example embodiment >

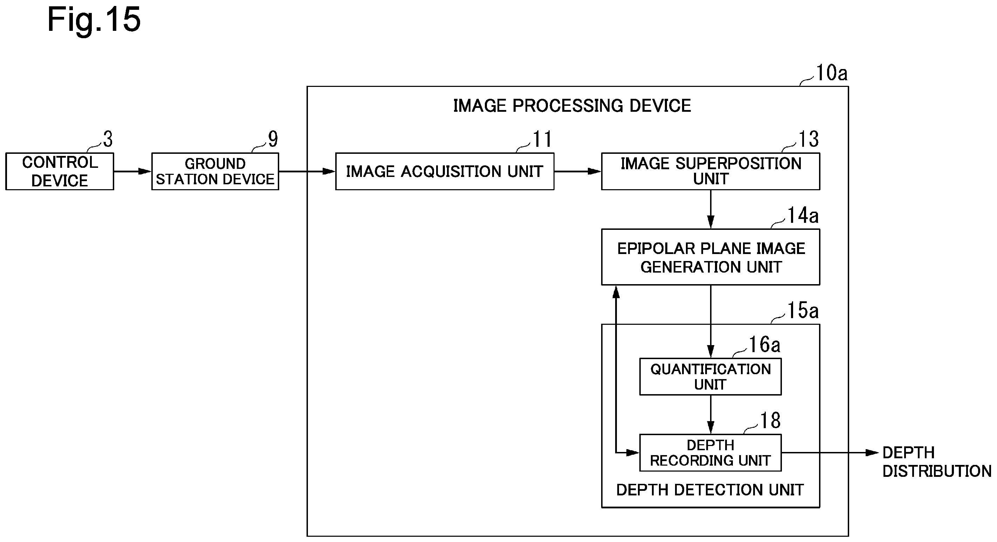

An example embodiment according to the present disclosure will be described with reference to the drawings. An example in which the image processing device 10a illustrated in Fig. 15 is used instead of the image processing device 10 illustrated in Fig. 10 will be described. Hereinafter, for the sake of convenience of description, an image processing system in which the image processing device 10 is replaced with the image processing device 10a is referred to as an image processing system 1a, and the image processing system 1a includes a satellite 2, a control device 3, an imaging device 4, a ground station device 9, and the image processing device 10a. The image processing device 10a includes an image acquisition unit 11, an image superimposition unit 13, an epipolar plane image generation unit 14a, and a depth detection unit 15a. That is, the image processing device 10a does not include the information acquisition unit 12 included in the image processing device 10 illustrated in Fig. 10. Therefore, the image processing device 10a generates the depth distribution of the satellite image data without using the orbit information of the satellite 2 acquired by the information acquisition unit 12, the information indicating the line-of-sight direction of each of the line sensors 20-1 to 20-J, and the moving direction and the altitude of the satellite 2 calculated by the information acquisition unit 12.

The epipolar plane image generation unit 14a has the same configuration as the epipolar plane image generation unit 14 for the configuration other than the following configuration. That is, the epipolar plane image generation unit 14 selects imaging traces common in the image data 41-1 to 41-J in the processing of S4 in Fig. 11, and selects any one imaging trace not set as a processing target from among the selected imaging traces as a transverse line in the processing of S5. On the other hand, the epipolar plane image generation unit 14a selects, as a transverse line, a line that transverses the overlapping portion detected in the processing of S3, the line lying along a direction in which the ranges of each piece of image data 41-1 to 41-J in the superimposed state are shifted. The direction in which the ranges of each piece of image data 41-1 to 41-J in the superimposed state are shifted can be detected as, for example, a direction of a line segment connecting the positions of pixels in which the pixel number and line number in the image data 41-1 to 41-J are the same.

The depth detection unit 15a includes a quantification unit 16a and a depth recording unit 18. The quantification unit 16a has the same configuration as the quantification unit 16 for the configuration other than the following configuration. The quantification unit 16 quantifies the line forming the streak pattern by using the line-of-sight direction angle $\alpha_j$ acquired from the information acquisition unit 12. On the other hand, the quantification unit 16a appropriately defines a plurality of line-of-sight direction angles $\alpha_j$ instead of the line-of-sight direction angle $\alpha_j$ acquired from the information acquisition unit 12, and detects the coefficient A and the coefficient B in a procedure similar to the procedure of the first example embodiment.

The depth calculation unit 18 retrieves all combinations of the coefficient A, the coefficient B, $\alpha_j$, and j, "$m_p$", and "Ns$_j$" for all J output by the quantification unit 16a. The depth recording unit 18 sets each of the coefficients A as a value indicating a relative depth at the position of (j; $m_p$, p + Ns$_j$) [where p = A$\alpha_j$ + B] specified using the coefficient B corresponding to the coefficient A, $\alpha_j$ corresponding to the coefficient A, "$m_p$", and "Ns$_j$" corresponding to the value of "j" corresponding to the coefficient A, and records the coefficient A in a corresponding location of the depth distribution DepthMap.

< Processing of second example embodiment >

In the processing by the image processing device 10a, except for the processing by the image processing device 10 illustrated in Fig. 11 to the processing of S2-1 and S4, in the processing of S5, the processing in which the epipolar plane image generation unit 14a selects a transverse line through the above-described procedure is performed. As the processing of S6 and S7, processing in which the epipolar plane image generation unit 14 is replaced with an epipolar plane image generation unit 14a is performed.

As the processing of S8, processing in which the quantification unit 16 is replaced with a quantification unit 16a is performed.

As the processing of S9, the quantification unit 16a detects the coefficient A, the coefficient B, $\alpha_j$, and j as values obtained by quantification through the above-described procedure, and outputs all combinations of the detected coefficient A, coefficient B, $\alpha_j$, and j, "$m_p$", and "$Ns_j$" for all J to the depth recording unit 18.

As the processing of S10, the depth recording unit 18 retrieves all the combinations of the coefficient A, coefficient B, $\alpha_j$, and j output by the quantification unit 16a, "$m_p$", and "$Ns_j$" for all J. The depth recording unit 18 sets the coefficient A as a value indicating a relative depth and records the coefficient A as a value of a depth distribution DepthMap(j; $m_p$, p + $Ns_j$) [where p = $A\alpha_j$ + B]. As the processing of S11, the depth recording unit 18 outputs the processing continuation instruction signal to the epipolar plane image generation unit 14a. Upon receiving the processing continuation instruction signal from the depth recording unit 18, the epipolar plane image generation unit 14a determines whether a transverse line that can be selected by the above-described procedure exists. When the epipolar plane image generation unit 14a determines that a transverse line exists (S11, No), the processing of S5, that is, the processing of selecting a transverse line is performed again through the above-described procedure.

On the other hand, when determining that the transverse line does not exist (S11, Yes), the epipolar plane image generation unit 14a outputs the processing end notification signal to the depth recording unit 18.

Upon receiving the processing end notification signal from the epipolar plane image generation unit 14a, the depth recording unit 18 outputs the depth distribution DepthMap(j; $m_p$, $A\alpha_j$ + B + $Ns_j$) as processing of S12, and ends the processing.

< Effects of second example embodiment >

By referring to the output depth distribution DepthMap(j; $m_p$, $A\alpha_j$ + B + $Ns_j$), the relative depth of the subject appearing in each piece of image data 41-1 to 41-J generated by imaging by each of the line sensors 20-1 to 20-J, that is, the degree of separation between the satellite 2 and each of the subjects can be grasped. The image processing device 10a cannot grasp an accurate distance between the satellite 2 and the subject as in the image processing device 10, but can grasp a positional relationship between the satellite 2 and each of the subjects. Therefore, the position in the depth direction of the subject appearing in the image data 41-1 to 41-J imaged and generated by the existing imaging device 4 can be distinguished without adding a device for imaging to the satellite 2 by using the image processing device 10a.

Furthermore, similarly to the image processing device 10, for example, a portion of ice and snow existing on the ground 100 and a portion of a cloud existing in the air can be segmented by setting an appropriate threshold value and dividing a region in the depth distribution DepthMap(j; $m_p$, $A\alpha_j$ + B + $Ns_j$).

< Effects common to first and second example embodiments >

The line sensor 20-1 to 20-J included in the imaging device 4 are imaging means for imaging visible light. Since the imaging means for imaging the visible light has higher spatial resolution as compared with an infrared sensor, LiDAR, or the like, high distinguishing accuracy can be obtained as compared with the case where an infrared sensor, LiDAR, or the like is used. Furthermore, in the image processing devices 10 and 10a, the epipolar plane image data is generated in such a way that the position shift due to the parallax can be robustly measured, and thus in a case where there is a color difference in the portion of the cloud appearing in the image data 41-1 to 41-J, the depth for each portion of the cloud can be calculated, and hence the three-dimensional structure of the surface of the cloud can be estimated.

< Modified example of example embodiment >

In the image processing devices 10 and 10a, when extracting the extraction line image data from each piece of the image data 41-1 to 41-J, the epipolar plane image generation units 14 and 14a may normalize the luminance level of the pixel value included in the extraction line image data for each piece of extracted extraction line image data. This normalization is normalization that makes the lines forming the streak pattern appearing in the epipolar plane image data clear. This normalization may be, for example, normalization in which the average value of the luminance levels for each pixel included in the extraction line image data is matched in all the extraction line image data.

The image processing devices 10 and 10a perform processing on satellite image data obtained by imaging by each of the J line sensors 20-1 to 20-J of the imaging device 4 included in the satellite 2. On the other hand, the image processing devices 10 and 10a are not limited to the satellite image data, and may perform processing on a plurality of pieces of image data imaged and generated by the line sensors 20-1 to 20-J arranged to have different line-of-sight directions. In this case, the line sensors 20-1 to 20-J may be in a state of moving by being mounted on a flying airplane or a traveling vehicle, or the line sensors 20-1 to 20-J may be in a state of being stationary and the subject moving. That is, as long as each of the line sensors 20-1 to 20-J are in a relationship of imaging a subject whose positional relationship therewith changes every time, the line sensors 20-1 to 20-J may move, the subject may move, or both the line sensors and the subject may move.

Although the imaging device 4 includes the line sensors 20-1 to 20-J, the imaging device 4 may include one area sensor instead of the line sensors 20-1 to 20-J. For example, in a case where the area sensor has pixels of J rows × M columns, if the area sensor is regarded as J line sensors, that is, J imaging means having M pixels for each row, the area sensor can be regarded as having the same configuration as the case of including the line sensors 20-1 to 20-J.

Furthermore, in a case where the imaging device 4 includes one area sensor, the following processing may be performed using this one area sensor as one imaging means. That is, if this one imaging means is provided in the satellite 2 and there is an overlapping portion between image data obtained by imaging at different times, a relative positional shift occurs in the image of the cloud 80 appearing in the overlapping portion. In this case, the depth of the subject can be detected even when image data obtained by imaging at different times by the area sensor is set as a processing target of the image processing devices 10 and 10a.

In the imaging device 4, each of the line sensors 20-1 to 20-J is provided with a band pass filter that transmits light beams in different wavelength bands in order to image visible light in different wavelength bands. On the other hand, a part of the line sensors 20-1 to 20-J may image visible light in the same wavelength band. In addition, all of the line sensors 20-1 to 20-J may image visible light in the same wavelength band, in which case, all of the line sensors 20-1 to 20-J may not include a band pass filter.

The line sensors 20-1 to 20-J included in the imaging device 4 are imaging means for imaging a wavelength band of visible light, but may be imaging means for imaging a wavelength band other than the wavelength band of visible light.

In the processing of the image processing device 10 illustrated in Fig. 11, all the imaging traces are selected as the transverse lines, and in the processing of the image processing device 10a, all the selectable imaging traces are selected as the transverse lines. On the other hand, in a case where the segmentation of the cloud 80 is the main purpose, the segmentation processing of the cloud 80 may be performed after the processing of S10, and in a case where the segmentation of the cloud 80 is performed, the processing may be terminated.

In the above description, the processing of the image processing systems 1 and 1a has been described on the assumption that the direction in which the satellite 2 moves is orthogonal to the longitudinal direction of each of the line sensors 20-1 to 20-J. On the other hand, the direction in which the satellite 2 moves may not be orthogonal to the longitudinal direction of each of the line sensors 20-1 to 20-J, and may be in an intersecting state. In the case of not being orthogonal, the J pieces of image data obtained by the photographing of each of the line sensors 20-1 to 20-J simply do not have a rectangular shape as in the image data 41-1 to 41-3 illustrated in Figs. 4 and 12. There is no problem in processing by the image processing devices 10 and 10a even if the shape is not rectangular, and the depth of the subject can be ultimately obtained.

As described with reference to Fig. 3, for example, the line-of-sight direction of the line sensors 20-1 to 20-J is expressed by, with the direction of the optical axis of the optical system of the imaging device 4 as a reference direction, the angle formed by the direction and the line-of-sight direction, but the direction of the optical axis of the optical system of the imaging device 4 may not be used as the reference. For example, a perpendicular direction from the satellite 2 toward the ground 100 may be set as the reference direction.

In the above description, when the control device 3 outputs the imaging instruction signal to the imaging device 4, the control unit 21 receives the imaging instruction signal, and the pulse signal is repeatedly supplied from the control unit 21 in parallel to each of the line sensors 20-1 to 20-J at regular intervals. On the other hand, the control unit 21 may supply the pulse signal to any one of the line sensors 20-1 to 20-J at one interval, and repeatedly supply the pulse signal such that the number of times of imaging by each of the line sensors 20-1 to 20-J becomes the same during a predetermined imaging time. In other words, in the plurality of pieces of image data generated by the imaging device 4, if the sizes of each piece of image data are the same, the timing to start the imaging and the timing to end the imaging may be different. Furthermore, if there is an overlapping portion in each of the plurality of pieces of image data generated by the imaging device 4, the sizes of the respective pieces of image data may be different. That is, the number of pulse signals supplied to each of the line sensors 20-1 to 20-J may be different during a predetermined imaging time based on one imaging instruction signal.

In the above description, in the processing of S2-1 in Fig. 11, the information acquisition unit 12 calculates the moving direction of the satellite 2 and the altitude of the satellite 2 at the generation time output by the image acquisition unit 11 from the orbit information. Here, the generation time output by the image acquisition unit 11 is a time indicating a timing at which the control device 3 provides the imaging instruction signal to the imaging device 4. On the other hand, in a case where there is a difference between the moving direction of the satellite 2 and the altitude of the satellite 2 at the beginning and the end of the predetermined imaging time, and this difference cannot be ignored, the information acquisition unit 12 may calculate the moving direction of the satellite 2 and the altitude of the satellite 2 from the orbit information as follows.

For example, a predetermined imaging time is stored in advance in a storage area inside the information acquisition unit 12. When acquiring the generation time from the image acquisition unit 11, the information acquisition unit 12 sets, as the generation time, a time obtained by adding a time of half a predetermined imaging time to the acquired generation time. In this case, the information acquisition unit 12 calculates the moving direction of the satellite 2 and the altitude of the satellite 2 at the time point when the predetermined imaging time has elapsed by half.

On the other hand, when acquiring the generation time from the image acquisition unit 11, the information acquisition unit 12 calculates a time obtained by adding a predetermined imaging time to the acquired generation time as the completion time. The information acquisition unit 12 calculates, as the moving direction of the satellite 2, a direction obtained by averaging the moving direction of the satellite 2 calculated based on the generation time and the moving direction of the satellite 2 calculated based on the completion time. Furthermore, the information acquisition unit 12 may calculate an altitude obtained by averaging the altitude of the satellite 2 calculated based on the generation time and the altitude of the satellite 2 calculated based on the completion time as the altitude of the satellite 2.

Using these procedures, the average moving direction of the satellite 2 and the altitude of the satellite 2 during a predetermined imaging time can be obtained. The information acquisition unit 12 may calculate the moving direction of the satellite 2 and the altitude of the satellite 2 at an arbitrary time between the generation time and the completion time.

Although the image superimposition unit 13 uses the WGS84 ellipsoid as the predetermined geodetic system, a geodetic system other than the WGS84 ellipsoid may be used.

Although the quantification units 16 and 16a use the Hough transform method as the predetermined image processing, a method other than the Hough transform method, for example, a template matching method, an optical flow method, or the like may be used.

Although the image processing devices 10 and 10a are provided in the building of the ground station 5, the image processing devices may be installed in a place other than the building of the ground station 5 and connected to the ground station device 9 via, for example, a communication network or the like. In addition, in the image processing systems 1 and 1a, the users of the satellite 2 and the ground station device 9 and the users of the image processing devices 10 and 10a may be different persons having no relationship. The satellite image data, the orbit information of the satellite 2, and the information indicating the line-of-sight direction of each of the line sensors 20-1 to 20-J are published by, for example, the ground station device 9 connected to the Internet, and each of the image processing devices 10 and 10a may acquire data and information necessary for each from the ground station device 9 via the Internet. In this case, the satellite image data, the orbit information of the satellite 2, and the information indicating the line-of-sight direction of each of the line sensors 20-1 to 20-J are not necessarily published to the Internet by the ground station device 9 for performing wireless communication with the satellite 2, and may be a general server device for acquiring the satellite image data, the orbit information of the satellite 2, and the information indicating the line-of-sight direction of each of the line sensors 20-1 to 20-J from the ground station device 9 by some means. In addition, the satellite image data stored in the ground station device 9, the orbit information of the satellite 2, and the information indicating the line-of-sight direction of each of the line sensors 20-1 to 20-J may be copied to, for example, a storage device such as a hard disk, the storage device may be connected to the image processing devices 10 and 10a, and each of the image processing devices 10 and 10a may acquire data and information necessary for each from the connected storage device.

< Hardware configuration >

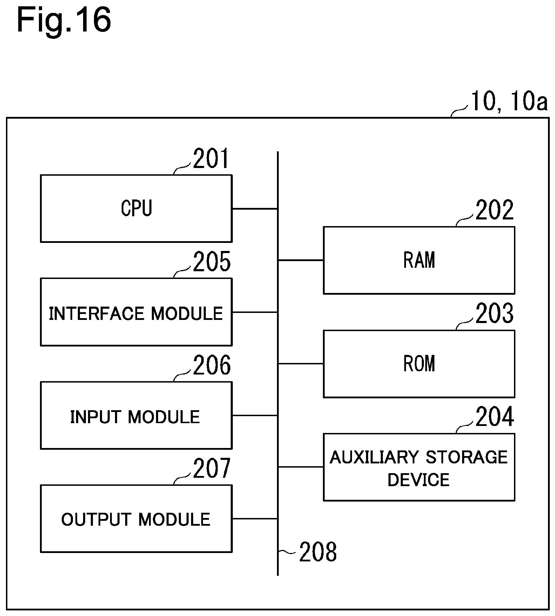

Fig. 16 is a diagram illustrating an example of a hardware configuration of the image processing devices 10 and 10a illustrated in Figs. 10 and 15 according to the present disclosure. The image processing devices 10 and 10a according to the present disclosure are computers including, for example, a central processing unit (CPU) 201, a random-access memory (RAM) 202, a read only memory (ROM) 203, an auxiliary storage device 204, an interface module 205, an input module 206, and an output module 207. The CPU 201, the RAM 202, the ROM 203, the auxiliary storage device 204, the interface module 205, the input module 206, and the output module 207 are mutually connected by a bus 208. The auxiliary storage device 204 includes, for example, a hard disk drive (HDD) or a solid state drive (SDD). The interface module 205 is, for example, a communication interface connected to the ground station device 9 included in the image acquisition unit 11 and the information acquisition unit 12. The input module 206 is included in, for example, the image acquisition unit 11, and the output module 207 is included in, for example, the depth calculation unit 17 and the depth recording unit 18.

When the CPU 201 executes an application program stored in advance in the ROM 203 or the auxiliary storage device 204, the image acquisition unit 11, the information acquisition unit 12, the image superimposition unit 13, the epipolar plane image generation units 14 and 14a, the depth detection units 15 and 15a, the quantification units 16 and 16a, the depth calculation unit 17, and the depth recording unit 18 are configured, and a storage area inside each functional unit described above is secured in the RAM 202 or the auxiliary storage device 204.

< Third example embodiment >

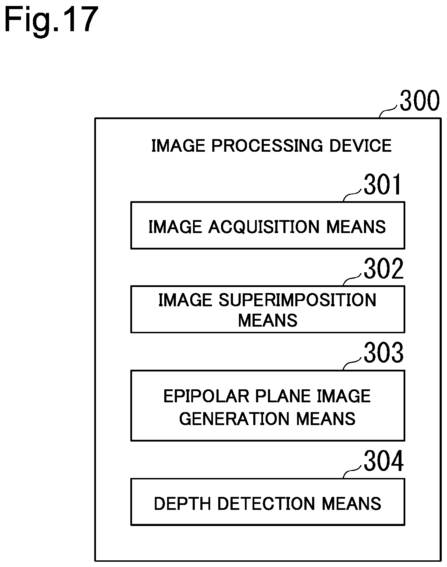

Hereinafter, one example embodiment according to the present disclosure will be described with reference to the drawings. As illustrated in Fig. 17, an image processing device 300 includes: an image acquisition means 301 for acquiring image data generated by imaging by an imaging means arranged in such a way as to have different line-of-sight directions, an image superimposition means 302 for superimposing the image data while performing alignment in such a way as to eliminate absolute positional shift caused by the different line-of-sight directions in each of the image data, an epipolar plane image generation means 303 for generating epipolar plane image data by selecting a transverse line that transverses an overlapping portion of the superimposed image data according to a direction in which ranges of each piece of image data in a superimposed state are shifted, and arranging each of the image data of the portion where the selected transverse line and the overlapping portion overlap in an order determined by magnitudes of inclinations of the line-of-sight directions corresponding to each, and a depth detection means 304 for detecting the depth of the subject appearing in the image data from the streak pattern appearing in the epipolar plane image data.

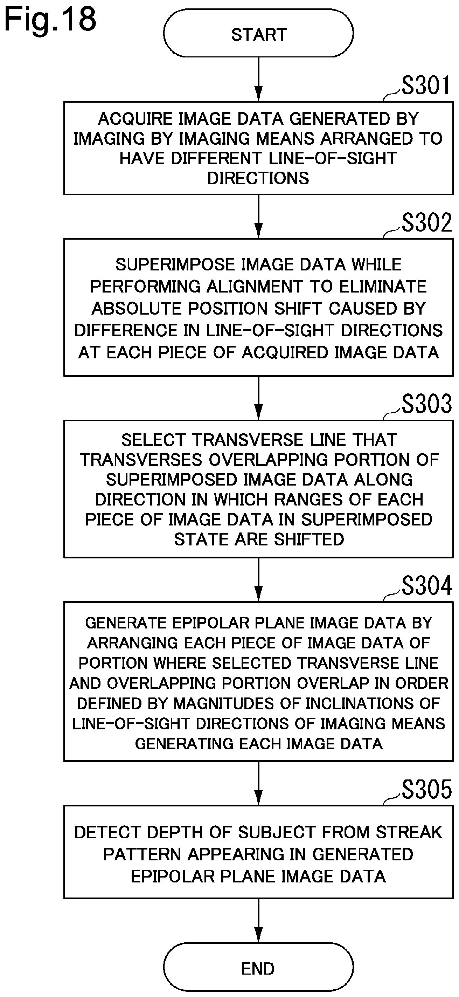

As illustrated in Fig. 18, in the image processing device 300, the image acquisition means 301 acquires image data generated by imaging by the imaging means arranged in such a way as to have different line-of-sight directions (S301). The image superimposition means 302 overlaps the image data while performing alignment in such a way as to eliminate absolute positional shift caused by a difference in line-of-sight directions in each of the image data acquired by the image acquisition means 301 (S302). The epipolar plane image generation means 303 selects a transverse line that transverses the overlapping portion of the superimposed image data according to the direction in which the ranges of each piece of image data in a superimposed state by the image superimposition means 302 are shifted (S303). The epipolar plane image generation means 303 generates the epipolar plane image data by arranging each piece of image data of the portion where the selected transverse line and the overlapping portion overlap in the order determined by the magnitudes of the inclinations of the line-of-sight directions corresponding to each (S304). The depth detection means 304 detects the depth of the subject appearing in the image data from the streak pattern appearing in the epipolar plane image data generated by the epipolar plane image generation means 303 (S305), and ends the processing.

While the present disclosure has been particularly shown and described with reference to example embodiments thereof, the present disclosure is not limited to these example embodiments. It will be understood by those of ordinary skill in the art that various changes in form and details may be made therein without departing from the spirit and scope of the present disclosure as defined by the claims. And each embodiment can be appropriately combined with other embodiments.

Some or all of the above example embodiments may be described as the following Supplementary Notes, but are not limited to the following.

(Supplementary Note 1)

An image processing device including: an image acquisition means (e.g., image acquisition unit 11) for acquiring image data generated by imaging by an imaging means arranged to have different line-of-sight directions, an image superimposition means (e.g., image superimposition unit 13) for superimposing the image data while performing alignment in such a way as to eliminate absolute positional shift caused by the different line-of-sight directions in each piece of image data, an epipolar plane image generation means (e.g., epipolar plane image generation units 14 and 14a) for selecting a transverse line that transverses an overlapping portion of the superimposed image data according to a direction in which ranges of each piece of image data in a superimposed state are shifted, and generating epipolar plane image data by arranging each piece of image data of a portion where the selected transverse line and the overlapping portion overlap in an order determined by magnitudes of inclinations of the line-of-sight directions corresponding to each, and a depth detection means (e.g., depth detection units 15 and 15a) for detecting a depth of a subject appearing in the image data from a streak pattern appearing in the epipolar plane image data.

(Supplementary Note 2)

The image processing device according to (supplementary note 1), in which plurality of the imaging means exists, each of the plurality of imaging means being arranged on one moving object such that a magnitude of an inclination in the line-of-sight direction increases according to an arrangement order of the plurality of imaging means, an order determined by the magnitude of the inclination in the line-of-sight direction of the imaging means is an arrangement order of the imaging means, and a direction in which the ranges of each piece of image data in the superimposed state are shifted is derived from a moving direction of the object.

(Supplementary Note 3)

The image processing device according to (supplementary note 2), in which the imaging means is a line sensor, a longitudinal direction of the imaging means intersects a moving direction of the object, and one of the imaging means repeatedly performs imaging in a predetermined imaging time during movement of the object, and a plurality of pieces of line image data generated for each repeatedly performed imaging being collected to generate one piece of image data.

(Supplementary Note 4)

The image processing device according to (supplementary note 2) or (supplementary note 3), in which all or some of the imaging means image a same wavelength band in visible light or different wavelength bands in visible light.

(Supplementary Note 5)

The image processing device according to any one of (supplementary note 2) to (supplementary note 4), in which the epipolar plane image generation means acquires information indicating a moving direction of the object, specifies a position of the image data corresponding to a center point of each of pixels included in the plurality of imaging means as an imaging point, detects an imaging trace that is a trajectory of the imaging point based on each of the specified imaging points and the information indicating the moving direction to be acquired, and selects one of the imaging traces common to the plurality of imaging means as the transverse line among the detected imaging traces.

(Supplementary Note 6)

The image processing device according to any one of (supplementary note 1) to (supplementary note 5), in which the line-of-sight direction is directed in a direction of the ground, and the image superimposition means projects each piece of image data onto a predetermined geodetic system as the alignment.

(Supplementary Note 7)

The image processing device according to any one of (supplementary note 1) to (supplementary note 6), in which the depth detection means quantifies an inclination of a line forming the streak pattern, and detects a depth of the subject based on a value obtained by the quantification.

(Supplementary Note 8)

The image processing device according to (supplementary note 7), in which the depth detection means acquires information indicating the line-of-sight direction and information indicating an altitude at which imaging has been performed, performs the quantification by using the acquired information indicating the line-of-sight direction, and detects the depth of the subject based on the acquired information indicating the altitude and a value obtained by the quantification.

(Supplementary Note 9)

An image processing system including an imaging means and an image processing device, in which the image processing device includes, an image acquisition means (e.g., image acquisition unit 11) for acquiring image data generated by imaging by the imaging means arranged to have different line-of-sight directions, an image superimposition means (e.g., image superimposition unit 13) for superimposing the image data while performing alignment in such a way as to eliminate absolute positional shift caused by the different line-of-sight directions in each piece of image data, an epipolar plane image generation means (e.g., epipolar plane image generation units 14 and 14a) for selecting a transverse line that transverses an overlapping portion of the superimposed image data according to a direction in which ranges of each piece of image data in a superimposed state are shifted, and generating epipolar plane image data by arranging each piece of image data of a portion where the selected transverse line and the overlapping portion overlap in an order determined by magnitudes of inclinations of the line-of-sight directions corresponding to each, and a depth detection means (e.g., depth detection units 15 and 15a) for detecting a depth of a subject appearing in the image data from a streak pattern appearing in the epipolar plane image data.

(Supplementary Note 10)

The image processing system according to (supplementary note 9), in which plurality of the imaging means exists, each of the plurality of imaging means being arranged on one moving object such that a magnitude of an inclination in the line-of-sight direction increases according to an arrangement order of the plurality of imaging means, an order determined by the magnitude of the inclination in the line-of-sight direction of the imaging means is an arrangement order of the imaging means, and a direction in which the ranges of each piece of image data in the superimposed state are shifted is derived from a moving direction of the object.

(Supplementary Note 11)

The image processing system according to (supplementary note 10), in which the imaging means is a line sensor, a longitudinal direction of the imaging means intersects a moving direction of the object, and one of the imaging means repeatedly performs imaging in a predetermined imaging time during movement of the object, and a plurality of pieces of line image data generated for each repeatedly performed imaging being collected to generate one piece of image data.

(Supplementary Note 12)

The image processing system according to (supplementary note 10) or (supplementary note 11), in which all or some of the imaging means image a same wavelength band in visible light or different wavelength bands in visible light.

(Supplementary Note 13)

The image processing system according to any one of (supplementary note 10) to (supplementary note 12), in which the epipolar plane image generation means acquires information indicating a moving direction of the object, specifies a position of the image data corresponding to a center point of each of pixels included in the plurality of imaging means as an imaging point, detects an imaging trace that is a trajectory of the imaging point based on each of the specified imaging points and the information indicating the moving direction to be acquired, and selects one of the imaging traces common to the plurality of imaging means as the transverse line among the detected imaging traces.

(Supplementary Note 14)

The image processing system according to any one of (supplementary note 9) to (supplementary note 13), in which the line-of-sight direction is directed in a direction of the ground, and the image superimposition means projects each piece of image data onto a predetermined geodetic system as the alignment.

(Supplementary Note 15)

The image processing system according to any one of (supplementary note 9) to (supplementary note 14), in which the depth detection means quantifies an inclination of a line forming the streak pattern, and detects a depth of the subject based on a value obtained by the quantification.

(Supplementary Note 16)

The image processing system according to (supplementary note 15), in which the depth detection means acquires information indicating the line-of-sight direction and information indicating an altitude at which imaging has been performed, performs the quantification by using the acquired information indicating the line-of-sight direction, and detects the depth of the subject based on the acquired information indicating the altitude and a value obtained by the quantification.

(Supplementary Note 16)

An image processing method including: acquiring image data generated by imaging by the imaging means arranged to have different line-of-sight directions, superimposing the image data while performing alignment in such a way as to eliminate absolute positional shift caused by the different line-of-sight directions in each piece of acquired image data, selecting a transverse line that transverses an overlapping portion of the superimposed image data according to a direction in which ranges of each piece of image data in a superimposed state are shifted, generating epipolar plane image data by arranging each piece of image data of a portion where the selected transverse line and the overlapping portion overlap in an order determined by magnitudes of inclinations of the line-of-sight directions corresponding to each, and detecting a depth of a subject appearing in the image data from a streak pattern appearing in the generated epipolar plane image data.

(Supplementary Note 17)

The image processing method according to (supplementary note 16), in which plurality of the imaging means exists, each of the plurality of imaging means being arranged on one moving object such that a magnitude of an inclination in the line-of-sight direction increases according to an arrangement order of the plurality of imaging means, an order determined by the magnitude of the inclination in the line-of-sight direction of the imaging means is an arrangement order of the imaging means, and a direction in which the ranges of each piece of image data in the superimposed state are shifted is derived from a moving direction of the object.

(Supplementary Note 18)

The image processing method according to (supplementary note 17), in which the imaging means is a line sensor, a longitudinal direction of the imaging means intersects a moving direction of the object, and one of the imaging means repeatedly performs imaging in a predetermined imaging time during movement of the object, and a plurality of pieces of line image data generated for each repeatedly performed imaging being collected to generate one piece of image data.

(Supplementary Note 19)

The image processing method according to (supplementary note 17) or (supplementary note 18), in which all or some of the imaging means image a same wavelength band in visible light or different wavelength bands in visible light.

(Supplementary Note 20)

The image processing method according to any one of (supplementary note 17) to (supplementary note 19), further including acquiring information indicating a moving direction of the object, specifying a position of the image data corresponding to a center point of each of pixels included in the plurality of imaging means as an imaging point, detecting an imaging trace that is a trajectory of the imaging point based on each of the specified imaging points and the information indicating the moving direction to be acquired, and selecting one of the imaging traces common to the plurality of imaging means as the transverse line among the detected imaging traces.

(Supplementary Note 21)

The image processing method according to any one of (supplementary note 16) to (supplementary note 20), in which the line-of-sight direction is directed in a direction of the ground, and each piece of image data is projected onto a predetermined geodetic system as the alignment.

(Supplementary Note 22)

The image processing method according to any one of (supplementary note 16) to (supplementary note 21), further including quantifying an inclination of a line forming the streak pattern, and detecting a depth of the subject based on a value obtained by the quantification.

(Supplementary Note 23)

The image processing method according to (supplementary note 22), further including acquiring information indicating the line-of-sight direction and information indicating an altitude at which imaging has been performed, performing the quantification by using the acquired information indicating the line-of-sight direction, and detecting the depth of the subject based on the acquired information indicating the altitude and a value obtained by the quantification.

(Supplementary Note 24)

A program for causing a computer to execute a process: acquiring image data generated by imaging by the imaging means arranged to have different line-of-sight directions, superimposing the image data while performing alignment in such a way as to eliminate absolute positional shift caused by the different line-of-sight directions in each piece of image data, selecting a transverse line that transverses an overlapping portion of the superimposed image data according to a direction in which ranges of each piece of image data in a superimposed state are shifted, generating epipolar plane image data by arranging each piece of image data of a portion where the selected transverse line and the overlapping portion overlap in an order determined by magnitudes of inclinations of the line-of-sight directions corresponding to each, and detecting a depth of a subject appearing in the image data from a streak pattern appearing in the epipolar plane image data.

(Supplementary Note 25)

The program according to (supplementary note 24), in which plurality of the imaging means exists, each of the plurality of imaging means being arranged on one moving object such that a magnitude of an inclination in the line-of-sight direction increases according to an arrangement order of the plurality of imaging means, an order determined by the magnitude of the inclination in the line-of-sight direction of the imaging means is an arrangement order of the imaging means, and a direction in which the ranges of each piece of image data in the superimposed state are shifted is derived from a moving direction of the object.

(Supplementary Note 26)

The program according to (supplementary note 25), in which the imaging means is a line sensor, a longitudinal direction of the imaging means intersects a moving direction of the object, and one of the imaging means repeatedly performs imaging in a predetermined imaging time during movement of the object, and a plurality of pieces of line image data generated for each repeatedly performed imaging being collected to generate one piece of image data.

(Supplementary Note 27)

The program according to (supplementary note 25) or (supplementary note 26), in which all or some of the imaging means image a same wavelength band in visible light or different wavelength bands in visible light.

(Supplementary Note 28)

The program according to any one of (supplementary note 25) to (supplementary note 27), further including i acquiring information indicating a moving direction of the object, specifying a position of the image data corresponding to a center point of each of pixels included in the plurality of imaging means as an imaging point, detecting an imaging trace that is a trajectory of the imaging point based on each of the specified imaging points and the information indicating the moving direction to be acquired, and selecting one of the imaging traces common to the plurality of imaging means as the transverse line among the detected imaging traces.

(Supplementary Note 29)

The program according to any one of (supplementary note 24) to (supplementary note 28), in which the line-of-sight direction is directed in a direction of the ground, and the image superimposition means projects each piece of image data onto a predetermined geodetic system as the alignment.

(Supplementary Note 30)

The program according to any one of (supplementary note 24) to (supplementary note 29), further including quantifying an inclination of a line forming the streak pattern, and detecting a depth of the subject based on a value obtained by the quantification.

(Supplementary Note 31)

The program according to (supplementary note 30), further including acquiring information indicating the line-of-sight direction and information indicating an altitude at which imaging has been performed, performing the quantification by using the acquired information indicating the line-of-sight direction, and detecting the depth of the subject based on the acquired information indicating the altitude and a value obtained by the quantification.

**Claims**

1. An image processing device comprising:

   an image acquisition means for acquiring image data generated by imaging by an imaging means arranged to have different line-of-sight directions;
   an image superimposition means for superimposing the image data while performing alignment in such a way as to eliminate absolute positional shift caused by the different line-of-sight directions in each piece of image data;
   an epipolar plane image generation means for selecting a transverse line that transverses an overlapping portion of the superimposed image data according to a direction in which ranges of each piece of image data in a superimposed state are shifted, and generating epipolar plane image data by arranging each piece of image data of a portion where the selected transverse line and the overlapping portion overlap in an order determined by magnitudes of inclinations of the line-of-sight directions corresponding to each; and
   a depth detection means for detecting a depth of a subject appearing in the image data from a streak pattern appearing in the epipolar plane image data.

2. The image processing device according to claim 1, wherein

   Plurality of the imaging means exists,
   each of the plurality of imaging means being arranged on one moving object such that a magnitude of an inclination in the line-of-sight direction increases according to an arrangement order of the plurality of imaging means;
   an order determined by the magnitude of the inclination in the line-of-sight direction of the imaging means is an arrangement order of the imaging means; and

   a direction in which the ranges of each piece of image data in the superimposed state are shifted is derived from a moving direction of the object.

3. The image processing device according to claim 2, wherein

   the imaging means is a line sensor;
   a longitudinal direction of the imaging means intersects a moving direction of the object, and one of the imaging means repeatedly performs imaging in a predetermined imaging time during movement of the object, and a plurality of pieces of line image data generated for each repeatedly performed imaging being collected to generate one piece of image data.

4. The image processing device according to claim 2 or 3, wherein
   all or some of the imaging means image a same wavelength band in visible light or different wavelength bands in visible light.

5. The image processing device according to any one of claims 2 to 4, wherein the at least one processor further performs operation to:

   acquire information indicating a moving direction of the object,
   specify a position of the image data corresponding to a center point of each of pixels included in the plurality of imaging means as an imaging point,
   detect an imaging trace that is a trajectory of the imaging point based on each of the specified imaging points and the information indicating the moving direction to be acquired, and
   select one of the imaging traces common to the plurality of imaging means as the transverse line among the detected imaging traces.

6. The image processing device according to any one of claims 1 to 5, wherein

   the line-of-sight direction is directed in a direction of the ground, and
   the image superimposition means
   projects each piece of image data onto a predetermined geodetic system as the alignment.

7. The image processing device according to any one of claims 1 to 6, wherein

   the depth detection means
   quantifies an inclination of a line forming the streak pattern, and detects a depth of the subject based on a value obtained by the quantification.

8. The image processing device according to claim 7, wherein

the depth detection means acquires information indicating the line-of-sight direction and information indicating an altitude at which imaging has been performed, performs the quantification by using the acquired information indicating the line-of-sight direction, and detects the depth of the subject based on the acquired information indicating the altitude and a value obtained by the quantification.

9. An image processing method comprising:

acquiring image data generated by imaging by the imaging means arranged to have different line-of-sight directions, superimposing the image data while performing alignment in such a way as to eliminate absolute positional shift caused by the different line-of-sight directions in each piece of acquired image data, selecting a transverse line that transverses an overlapping portion of the superimposed image data according to a direction in which ranges of each piece of image data in a superimposed state are shifted, generating epipolar plane image data by arranging each piece of image data of a portion where the selected transverse line and the overlapping portion overlap in an order determined by magnitudes of inclinations of the line-of-sight directions corresponding to each, and detecting a depth of a subject appearing in the image data from a streak pattern appearing in the generated epipolar plane image data.

10. A program for causing a computer to execute a process:

acquiring image data generated by imaging by the imaging means arranged to have different line-of-sight directions, superimposing the image data while performing alignment in such a way as to eliminate absolute positional shift caused by the different line-of-sight directions in each piece of image data, selecting a transverse line that transverses an overlapping portion of the superimposed image data according to a direction in which ranges of each piece of image data in a superimposed state are shifted, generating epipolar plane image data by arranging each piece of image data of a portion where the selected transverse line and the overlapping portion overlap in an order determined by magnitudes of inclinations of the line-of-sight directions corresponding to each, and detecting a depth of a subject appearing in the image data from a streak pattern appearing in the epipolar plane image data.

Fig.1

Fig.2

IMAGING DEVICE

21 ~ CONTROL UNIT

20-1

20-2

20-3

20-j

20-J

4

20-j

30-j-1  30-j-3    30-j-m    30-j-M
  30-j-2

Fig.3

Fig.4

LATITUDE

ST

41-2  41s-2
41s-3
40-1
40-2
41-3
40-3
41s-1
41e-3
41-1
41e-1
41e-2

LONGITUDE

EP 4 693 188 A1

# Fig.5

EP 4 693 188 A1

Fig.6

# Fig.7

Fig.8

Fig.9A

80  94  93  92  91

41-1

41e-1

41s-1

t9  t6  t3

Fig.9B

80  94  93  92  91

41-2

41e-2

41s-2

t8  t5  t2

Fig.9C

80  94  93  92  91

41-3

41e-3

41s-3

t7  t4  t1

# Fig.10

EP 4 693 188 A1

```
                                                           ┌─10
┌──────────────────────────────────────────────────────────────────────┐
│                       IMAGE PROCESSING DEVICE                          │
│                                                                        │
│              ┌─11                            ┌─13                       │
│         ┌──────────────────────┐      ┌──────────────────────┐         │
│    ┌───▶│ IMAGE ACQUISITION UNIT├─────▶│ IMAGE SUPERPOSITION  │         │
│    │    └──────────┬───────────┘      │       UNIT           │         │
│    │               │                  └──────────┬───────────┘         │
│    │               │                             │      ┌─14           │
│    │               │                  ┌──────────▼───────────┐         │
│    │               │           ┌─────▶│ EPIPOLAR PLANE IMAGE │         │
│    │               │           │      │   GENERATION UNIT    │         │
│    │               │           │      └──────────┬───────────┘         │
│    │               │           │                 │      ┌─15           │
│    │               │           │      ┌──────────▼───────────────┐     │
│    │               │           │      │              ┌─16         │     │
│    │               │           │      │  ┌──────────────────┐     │     │
│    │               ▼           │      │  │ QUANTIFICATION   │     │     │
│    │         ┌──────────────┐  │      │  │     UNIT         │     │     │
│    │    ┌───▶│ INFORMATION   ├─┘      │  └────────┬─────────┘     │     │
│    │    │    │ ACQUISITION   ├────────▶         │      ┌─17       │     │
│    │    │    │    UNIT       │        │  ┌────────▼─────────┐     │     │
│    │    │    └──────────────┘  ┌──────┼─▶│     DEPTH        ├─────┼────▶ DEPTH
│    │    │         ┌─12          │      │  │ CALCULATION UNIT │     │     DISTRIBUTION
│    │    │                       │      │  └──────────────────┘     │     │
│    │    │                       │      │    DEPTH DETECTION UNIT   │     │
│    │    │                       │      └──────────────────────────┘     │
└────┼────┼───────────────────────┼──────────────────────────────────────┘
     │    │                        
     │    │                        
┌────────────┐    ┌─────────────┐  
│ CONTROL    │    │   GROUND    │  
│ DEVICE     ├───▶│STATION DEVICE├●
└────────────┘    └─────────────┘  
     └─3              └─9          
```

# Fig.11

START

S1
ACQUIRE IMAGE DATA FROM SATELLITE IMAGE DATA

S2-1
ACQUIRE INFORMATION INDICATING LINE-OF-SIGHT DIRECTION OF EACH OF LINE SENSORS AND INFORMATION INDICATING ORBIT OF SATELLITE

S2-2
PROJECT AND SUPERIMPOSE IMAGE DATA ON PREDETERMINED GEODETIC SYSTEM

S3
DETECT OVERLAPPING PORTION OF SUPERIMPOSED IMAGE DATA

S4
SELECT IMAGING TRACE COMMON TO ALL LINE SENSORS

S5
SELECT ONE OF IMAGING TRACES AS TRANSVERSE LINE

S6
EXTRACT IMAGE DATA OF PORTION WHERE OVERLAPPING PORTION AND TRANSVERSE LINE OVERLAP

S7
ARRANGE EACH PIECE OF EXTRACTED LINE IMAGE DATA ACCORDING TO ARRANGEMENT ORDER OF LINE SENSORS IMAGING EACH IMAGE DATA, AND GENERATE EPIPOLAR PLAN IMAGE DATA

S8
EXTRACT LINE FORMING STREAK PATTERN APPEARING IN EPIPOLAR PLANE IMAGE DATA BY PREDETERMINED IMAGE PROCESSING

S9
QUANTIFY EXTRACTED LINE USING INFORMATION INDICATING LINE-OF-SIGHT DIRECTION OF EACH LINE SENSOR

S10
CALCULATE DEPTH BASED ON VALUE OBTAINED BY QUANTIFICATION, INFORMATION INDICATING ORBIT, AND INFORMATION INDICATING LINE-OF-SIGHT DIRECTION

S11
ALL IMAGING TRACES SELECTED AS TRANSVERSE LINE?

NO

YES

S12
OUTPUT DEPTH DISTRIBUTION

END

EP 4 693 188 A1

Fig.12

Fig.13

EP 4 693 188 A1

## Fig.14

# Fig.15

CONTROL DEVICE 3 → GROUND STATION DEVICE 9 → 

IMAGE PROCESSING DEVICE 10a

IMAGE ACQUISITION UNIT 11 → IMAGE SUPERPOSITION UNIT 13

EPIPOLAR PLANE IMAGE GENERATION UNIT 14a

DEPTH DETECTION UNIT 15a

QUANTIFICATION UNIT 16a

DEPTH RECORDING UNIT 18 → DEPTH DISTRIBUTION

EP 4 693 188 A1

Fig.16

# Fig.17

IMAGE PROCESSING DEVICE — 300

IMAGE ACQUISITION MEANS — 301

IMAGE SUPERIMPOSITION MEANS — 302

EPIPOLAR PLANE IMAGE GENERATION MEANS — 303

DEPTH DETECTION MEANS — 304

# Fig.18

```
        ( START )
           │
           ▼                           ⌐S301
┌──────────────────────────────────────┐
│   ACQUIRE IMAGE DATA GENERATED BY     │
│  IMAGING BY IMAGING MEANS ARRANGED TO │
│      HAVE DIFFERENT LINE-OF-SIGHT     │
│             DIRECTIONS                │
└──────────────────────────────────────┘
           │
           ▼                           ⌐S302
┌──────────────────────────────────────┐
│   SUPERIMPOSE IMAGE DATA WHILE        │
│  PERFORMING ALIGNMENT TO ELIMINATE    │
│  ABSOLUTE POSITION SHIFT CAUSED BY    │
│ DIFFERENCE IN LINE-OF-SIGHT DIRECTIONS│
│   AT EACH PIECE OF ACQUIRED IMAGE DATA │
└──────────────────────────────────────┘
           │
           ▼                           ⌐S303
┌──────────────────────────────────────┐
│    SELECT TRANSVERSE LINE THAT        │
│ TRANSVERSES OVERLAPPING PORTION OF    │
│   SUPERIMPOSED IMAGE DATA ALONG       │
│  DIRECTION IN WHICH RANGES OF EACH    │
│  PIECE OF IMAGE DATA IN SUPERIMPOSED  │
│         STATE ARE SHIFTED             │
└──────────────────────────────────────┘
           │
           ▼                           ⌐S304
┌──────────────────────────────────────┐
│ GENERATE EPIPOLAR PLANE IMAGE DATA BY │
│   ARRANGING EACH PIECE OF IMAGE DATA OF│
│ PORTION WHERE SELECTED TRANSVERSE LINE │
│ AND OVERLAPPING PORTION OVERLAP IN ORDER│
│ DEFINED BY MAGNITUDES OF INCLINATIONS OF│
│ LINE-OF-SIGHT DIRECTIONS OF IMAGING MEANS│
│     GENERATING EACH IMAGE DATA        │
└──────────────────────────────────────┘
           │
           ▼                           ⌐S305
┌──────────────────────────────────────┐
│ DETECT DEPTH OF SUBJECT FROM STREAK   │
│  PATTERN APPEARING IN GENERATED       │
│      EPIPOLAR PLANE IMAGE DATA        │
└──────────────────────────────────────┘
           │
           ▼
        (  END  )
```

**EUROPEAN SEARCH REPORT**

Application Number

EP 25 19 2658

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BROSCH NICOLE ET AL: "Warping-based Motion Artefact Compensation for Multi-Line Scan Light Field Imaging", PROC. IS&T INT'L. SYMP. ON ELECTRONIC IMAGING: COMPUTATIONAL IMAGING XVI, vol. 30, 28 January 2018 (2018-01-28), pages 273-1, XP093343135, DOI: 10.2352/ISSN.2470-1173.2018.15.COIMG-273 | 1-5,7-10 | INV. G06T7/55 |
| A | * abstract * * sections "Introduction", "Algorithm Description", "Experimental Results" * * figures 1, 2, 3, 5 * | 6 | |
| L | STOLC SVORAD ET AL: "Depth and all-in-focus imaging by a multi-line-scan light-field camera", JOURNAL OF ELECTRONIC IMAGING, S P I E - INTERNATIONAL SOCIETY FOR OPTICAL ENGINEERING, US, vol. 23, no. 5, 1 September 2014 (2014-09-01), page 53020, XP060047706, ISSN: 1017-9909, DOI: 10.1117/1.JEI.23.5.053020 [retrieved on 2014-10-15] * abstract * * sections 1, 2 * * pages 1, 2, 4 * | 1-10 | |

TECHNICAL FIELDS
SEARCHED      (IPC)

G06T

The present search report has been drawn up for all claims

| Place of search | Date of completion of the search | Examiner |
|---|---|---|
| Munich | 8 December 2025 | Katartzis, Antonios |

EPO FORM 1503 03.82 (P04C01)

**REFERENCES CITED IN THE DESCRIPTION**

**Patent documents cited in the description**

- JP 2024130765 A

- JP 2023086449 A